# EUROPEAN PATENT SPECIFICATION

(11) **EP 3 678 132 B1**
(45) Date of publication and mention of the grant of the patent: **31.07.2024**
(21) Application number: 18865649.0
(22) Date of filing: 10.10.2018
(51) Int. Cl.: G06V 10/10, G06V 10/25, G06V 20/20, G06F 3/16, G06F 3/041, G06F 16/583, H04N 21/258, H04N 21/236, G10L 15/28, G10L 15/04

(54) **ELECTRONIC DEVICE AND SERVER FOR PROCESSING USER UTTERANCES**
ELEKTRONISCHE VORRICHTUNG UND SERVER ZUR VERARBEITUNG VON BENUTZERÄUSSERUNGEN
DISPOSITIF ÉLECTRONIQUE ET SERVEUR DE TRAITEMENT D'ÉNONCÉS D'UTILISATEUR

(30) Priority: 12.10.2017 KR 20170132812
(43) Date of publication of application: 08.07.2020
(73) Proprietor: Samsung Electronics Co., Ltd., Suwon-si, Gyeonggi-do 16677 (KR)
(72) Inventor: LEE, Seo Young, Suwon-si Gyeonggi-do 16543 (KR); SON, Joo Young, Yongin-si Gyeonggi-do 17108 (KR); CHO, Jung Chan, Suwon-si Gyeonggi-do 16545 (KR); SHIN, Dae Kyu, Suwon-si Gyeonggi-do 16294 (KR); KIM, Ji Hyun, Suwon-si Gyeonggi-do 16505 (KR); PARK, Ji Yoon, Yongin-si Gyeonggi-do 17103 (KR); LEE, Da Som, Seoul 08012 (KR)
(74) Representative: HGF
(86) International application number: PCT/KR2018/011851
(87) International publication number: WO 2019/074257

(56) References cited:
- EP-A1- 2 947 635
- KR-A- 20130 055 029
- KR-A- 20130 124 767
- KR-A- 20150 059 466
- US-A1- 2010 260 373
- US-A1- 2010 260 426
- US-A1- 2015 088 923
- US-A1- 2016 203 388

## Description

### [Technical Field]

Embodiments disclosed in the disclosure refer to a technology, in particular an electronic device, for processing a user utterance.

### [Background Art]

In addition to a conventional input method using a keyboard or a mouse, electronic devices have recently supported various input schemes such as a voice input and the like. For example, the electronic devices such as smart phones or tablet PCs may receive a user voice and then may provide a service that performs an action corresponding to the received user voice.

The speech recognition service is being developed based on a technology for processing a natural language. The technology for processing a natural language refers to a technology that grasps the intent of a user utterance and generates the result matched with the intent to provide the user with a service.
US2010/0260426 relates to systems and methods for real-time image recognition and mobile visual searching.
EP2947635 relates to a display apparatus which displays a plurality of items, a communicator which receives a pointing signal, an input device which receives a voice command, and a processor which in response to a voice command regarding a selected item performs a control operation based on an extracted keyword.

US2015/088923 relates to using sensor inputs from a computing device to determine a search query.

### [Disclosure]

### [Summary]

The extent of protection conferred is determined by the claims.

### [Technical Problem]

In the case where an electronic device obtains only the result corresponding to a user utterance to provide a user with the result when receiving and processing the user utterance, the electronic device may not organically process the current state of the electronic device or the service currently being provided and the received user input.

When an electronic device processes a task associated with an object included in the image displayed on a display, the electronic device may perform a task by separately receiving a user input for selecting an object on the image. In addition, when processing a task associated with one of a plurality of objects included in an image displayed on an electronic device, the electronic device may perform a task by separately receiving a user input for selecting one object of the plurality of objects on the image.

Various embodiments of the disclosure provide an electronic device that analyzes an image, recognizes an object on the image, generates information associated with the recognized object, and provides a user with the information.

### [Technical Solution]

According to an embodiment of the claimed invention, an electronic device includes a housing, a speaker positioned at a first portion of the housing, a microphone positioned at a second portion of the housing, a touch screen display positioned at a third portion of the housing, a communication circuit positioned inside the housing or attached to the housing, a processor positioned inside the housing and operatively connected to the speaker, the microphone, the display, and the communication circuit, and a memory positioned inside the housing and operatively connected to the processor. The memory stores instructions that, when executed, cause the processor to display a still image including a plurality of objects on the display, receive a voice input of a user through the microphone, wherein the voice input includes a request for performing a task associated with at least one object included in the image, wherein the task further includes obtaining information associated with the at least one object included in the image, to transmit first data associated with the voice input to a first external server via the communication circuit, to receive a first response from the first external server via the communication circuit, wherein the first response includes a path rule including information about an application to be executed, an action including a sequence of one or more states to be executed in the application, and a plurality of parameters necessary to execute the action, wherein the plurality of parameters include a first text associated with the at least one object and a third text associated with a category of the at least one object, wherein the first text includes information indicating the at least one object extracted from text data converted from the voice input; and execute the sequence of one or more states to be executed in the application depending on the received path rule including the steps of: extracting a region image of at least one object associated with the third text from the still image; transmitting the region image associated with the voice input and the first text included in the path rule to a second external server via the communication circuit; receiving a second response from the second external server via the communication circuit, wherein the second response includes a second text associated with performing at least part of the task; and providing at least part of the second text via the display or the speaker.

According to an example useful for understanding the claimed invention, a server processing an image may include a network interface, a processor operatively connected to the network interface, and a memory operatively connected to the processor and including at least one database in which information associated with an object is stored. The memory may store instructions that, when executed, cause the processor to receive first data associated with an image including at least one object and a first text from an external electronic device via the network interface, to recognize the at least one object included in the image, to obtain information about the recognized at least one object from the database, to generate a second text, using the obtained information and the first text, and to transmit the generated second text to the external electronic device. The first text may be associated with the at least one object.

### [Advantageous Effects]

According to various embodiments of the claimed invention, when an electronic device receives a user utterance associated with an object on an image, the electronic device recognizes the object on the image by analyzing the image through a vision server, generates information associated with the recognized object to provide the user with the information, and may organically process the image displayed on a screen and a user utterance.

The electronic device recognizes the category of the object on the image, generates information about the object on the image, using the recognized category and user utterance information, and may efficiently provide information about the object associated with a user input. Furthermore, when an image includes a plurality of objects, the electronic device may recognize a specific object included in the user input to select one of the plurality of objects and may provide the user with information about the selected object.

Besides, a variety of effects directly or indirectly understood through the disclosure may be provided.

### [Description of Drawings]

FIG. 1 is a view illustrating an integrated intelligence system.
FIG. 2 is a block diagram illustrating a user terminal of an integrated intelligence system.
FIG. 3 is a view illustrating that an intelligence app of a user terminal is executed.
FIG. 4 is a block diagram illustrating an intelligence server of an integrated intelligence system.
FIG. 5 is a view illustrating a method in which a natural language understanding (NLU) module generates a path rule.
FIG. 6 is a block diagram illustrating an intelligence vision system.
FIG. 7 is a diagram illustrating a process in which an intelligence vision system processes a user utterance, according to an example useful for understanding the claimed invention.
FIGS. 8, 9 and 10 are views illustrating that an intelligence vision system determines an ROI of an image, according to an example useful for understanding the claimed invention.
FIG. 11 is a diagram illustrating a process of providing information by classifying a category of an object included in an image in a vision server, according to an example useful for understanding the claimed invention.
FIG. 12 is a sequence diagram of an intelligence vision system processing a user utterance associated with a preview image according to an example not in accordance with the literal wording of the claims.
FIG. 13 is a sequence diagram of an intelligence vision system processing of a user utterance associated with an image, according to an embodiment of the claimed invention.
FIG. 14 is a diagram illustrating a process of providing information by classifying a category of an object included in an image in an intelligence server, according to an example useful for understanding the claimed invention.
FIG. 15 is a sequence diagram of an intelligence vision system processing a user utterance associated with a preview image through a camera app, according to an example not in accordance with the literal wording of the claims.
FIG. 16 is a sequence diagram of an intelligence vision system processing of a user utterance associated with an image through a gallery app, according to an example not in accordance with the literal wording of the claims.
FIG. 17 illustrates a block diagram of an electronic device in a network environment, according to various embodiments.

With regard to description of drawings, the same or similar components may be marked by the same or similar reference numerals.

### [Mode for Invention]

Hereinafter, various embodiments of the disclosure will be described with reference to accompanying drawings. However, those of ordinary skill in the art will recognize that modification, equivalent, and/or alternative on various embodiments described herein can be variously made.

Prior to describing an embodiment of the disclosure, an integrated intelligence system to which an embodiment of the disclosure is capable of being applied will be described.

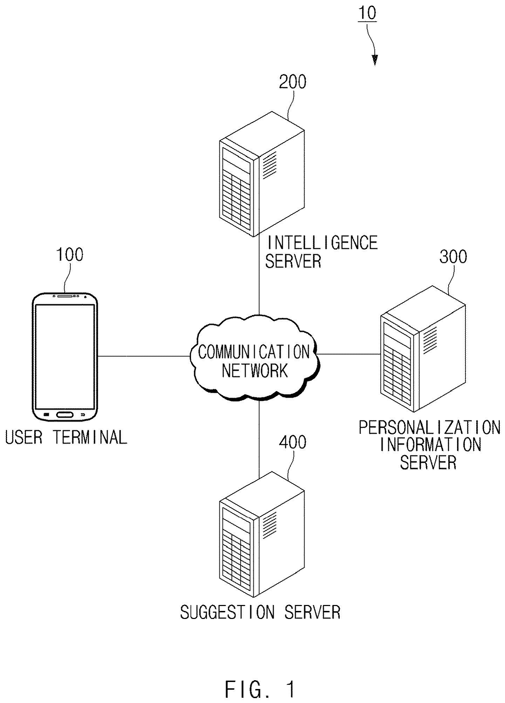

FIG. 1 is a view illustrating an integrated intelligence system.

Referring to FIG. 1, an integrated intelligence system 10 may include a user terminal 100, an intelligence server 200, a personalization information server 300, or a suggestion server 400.

The user terminal 100 may provide a service necessary for a user through an app (or an application program) (e.g., an alarm app, a message app, a picture (gallery) app, or the like) stored in the user terminal 100. For example, the user terminal 100 may execute and operate another app through an intelligence app (or a speech recognition app) stored in the user terminal 100. The user terminal 100 may receive a user input for executing the other app and executing an action through the intelligence app of the user terminal 100. For example, the user input may be received through a physical button, a touch pad, a voice input, a remote input, or the like. Various types of terminal devices (or an electronic device), which are connected with Internet, such as a mobile phone, a smartphone, personal digital assistant (PDA), a notebook computer, and the like may correspond to the user terminal 100.

The user terminal 100 may receive a user utterance as a user input. The user terminal 100 may receive the user utterance and may generate a command for operating an app based on the user utterance. As such, the user terminal 100 may operate the app, using the command.

The intelligence server 200 may receive a voice input of a user from the user terminal 100 over a communication network and may convert the voice input to text data. The intelligence server 200 may generate (or select) a path rule based on the text data. The path rule may include information about an action (or an operation) for performing the function of an app or information about a parameter necessary to perform the action. In addition, the path rule may include the order of the action of the app. The user terminal 100 may receive the path rule, may select an app depending on the path rule, and may execute the action included in the path rule in the selected app.

Generally, the term "path rule" of the disclosure may mean, but not limited to, the sequence of states, which allows the electronic device to perform the task requested by the user. In other words, the path rule may include information about the sequence of the states. For example, the task may be a certain action that the intelligence app is capable of providing. The task may include the generation of a schedule, the transmission of a picture to the desired counterpart, or the provision of weather information. The user terminal 100 may perform the task by sequentially having at least one or more states (e.g., the operating state of the user terminal 100).

The path rule may be provided or generated by an artificial intelligent (AI) system. The AI system may be a rule-based system, or may be a neural network-based system (e.g., a feedforward neural network (FNN) or a recurrent neural network (RNN)). Alternatively, the AI system may be a combination of the above-described systems or an Al system different from the above-described system. The path rule may be selected from a set of predefined path rules or may be generated in real time in response to a user request. For example, the AI system may select at least a path rule of predefined plurality of path rules, or may generate a path rule dynamically (or in real time). Furthermore, the user terminal 100 may use a hybrid system to provide the path rule.

The user terminal 100 may execute the action and may display a screen corresponding to a state of the user terminal 100, which executes the action, in a display. For another example, the user terminal 100 may execute the action and may not display the result obtained by executing the action in the display. For example, the user terminal 100 may execute a plurality of actions and may display only the result of a part of the plurality of actions in the display. For example, the user terminal 100 may display only the result, which is obtained by executing the last action, on the display. For another example, the user terminal 100 may receive the user input to display the result obtained by executing the action in the display.

The personalization information server 300 may include a database in which user information is stored. For example, the personalization information server 300 may receive the user information (e.g., context information, execution of an app, or the like) from the user terminal 100 and may store the user information in the database. The intelligence server 200 may be used to receive the user information from the personalization information server 300 over the communication network and to generate a path rule associated with the user input. The user terminal 100 may receive the user information from the personalization information server 300 over the communication network, and may use the user information as information for managing the database.

The suggestion server 400 may include a database storing information about a function in a terminal, introduction of an application, or a function to be provided. For example, the suggestion server 400 may include a database associated with a function that a user utilizes by receiving the user information of the user terminal 100 from the personalization information server 300. The user terminal 100 may receive information about the function to be provided from the suggestion server 400 over the communication network and may provide the information to the user.

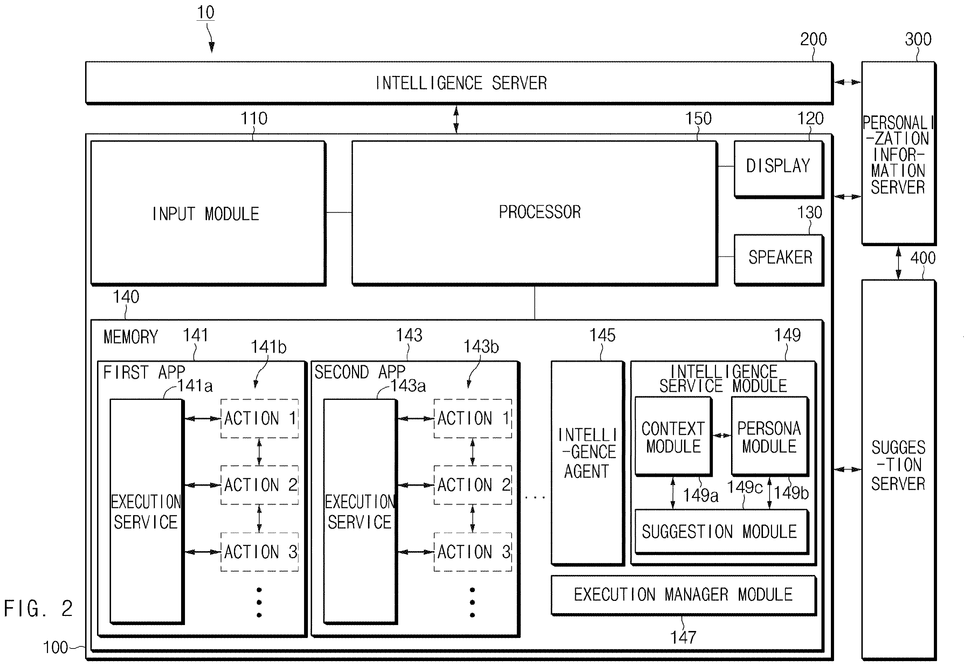

FIG. 2 is a block diagram illustrating a user terminal of an integrated intelligence system.

Referring to FIG. 2, the user terminal 100 may include an input module 110, a display 120, a speaker 130, a memory 140, or a processor 150. The user terminal 100 may further include housing, and components of the user terminal 100 may be seated in the housing or may be positioned on the housing. The user terminal 100 may further include a communication circuit positioned in the housing. The user terminal 100 may transmit or receive data (or information) to or from an external server (e.g., the intelligence server 200) through the communication circuit.

The input module 110 may receive a user input from a user. For example, the input module 110 may receive the user input from the connected external device (e.g., a keyboard or a headset). For another example, the input module 110 may include a touch screen (e.g., a touch screen display) coupled to the display 120. For another example, the input module 110 may include a hardware key (or a physical key) positioned in the user terminal 100 (or the housing of the user terminal 100).

The input module 110 may include a microphone that is capable of receiving the utterance of the user as a voice signal. For example, the input module 110 may include a speech input system and may receive the utterance of the user as a voice signal through the speech input system. For example, the microphone may be positioned at a part (e.g., a first portion) of the housing.

The display 120 may display an image, a video, and/or an execution screen of an application. For example, the display 120 may display a graphic user interface (GUI) of an app. The display 120 may be positioned at a part (e.g., a second part) of the housing.

The speaker 130 may output a voice signal. For example, the speaker 130 may output the voice signal generated in the user terminal 100 to the outside. The speaker 130 may be positioned at a part (e.g., a third portion) of the housing.

The memory 140 may store a plurality of apps (or application program) 141 and 143. For example, the plurality of apps 141 and 143 may be a program for performing a function corresponding to the user input. The memory 140 may store an intelligence agent 145, an execution manager module 147, or an intelligence service module 149. For example, the intelligence agent 145, the execution manager module 147, and the intelligence service module 149 may be a framework (or application framework) for processing the received user input (e.g., user utterance).

The memory 140 may include a database capable of storing information necessary to recognize the user input. For example, the memory 140 may include a log database capable of storing log information. For another example, the memory 140 may include a persona database capable of storing user information.

The memory 140 may store the plurality of apps 141 and 143, and the plurality of apps 141 and 143 may be loaded to operate. For example, the plurality of apps 141 and 143 stored in the memory 140 may operate after being loaded by the execution manager module 147. The plurality of apps 141 and 143 may include execution service modules 141a and 143a performing a function. The plurality of apps 141 and 143 may perform a plurality of actions (e.g., a sequence of states) 141b and 143b through execution service modules 141a and 143a for the purpose of performing a function. In other words, the execution service modules 141a and 143a may be activated by the execution manager module 147, and then may execute the plurality of actions 141b and 143b.

When the actions 141b and 143b of the apps 141 and 143 are executed, an execution state screen according to the execution of the actions 141b and 143b may be displayed in the display 120. For example, the execution state screen may be a screen in a state where the actions 141b and 143b are completed. For another example, the execution state screen may be a screen in a state where the execution of the actions 141b and 143b is in partial landing (e.g., when a parameter necessary for the actions 141b and 143b are not entered).

The execution service modules 141a and 143a may execute the actions 141b and 143b depending on a path rule. For example, the execution service modules 141a and 143a may be activated by the execution manager module 147, may receive an execution request from the execution manager module 147 depending on the path rule, and may execute functions of the apps 141 and 143 by performing the actions 141b and 143b depending on the execution request. When the execution of the actions 141b and 143b is completed, the execution service modules 141a and 143a may transmit completion information to the execution manager module 147.

When the plurality of actions 141b and 143b are respectively executed in the apps 141 and 143, the plurality of actions 141b and 143b may be executed sequentially. When the execution of one action (e.g., action 1 of the first app 141 or action 1 of the second app 143) is completed, the execution service modules 141a and 143a may open the next action (e.g., action 2 of the first app 141 or action 2 of the second app 143) and may transmit the completion information to the execution manager module 147. Here, it is understood that opening an arbitrary action is to change a state of the arbitrary action to an executable state or to prepare the execution of the action. In other words, when the arbitrary action is not opened, the corresponding action may be not executed. When the completion information is received, the execution manager module 147 may transmit the execution request for the next action (e.g., action 2 of the first app 141 or action 2 of the second app 143) to the execution service module. When the plurality of apps 141 and 143 are executed, the plurality of apps 141 and 143 may be sequentially executed. For example, when receiving the completion information after the execution of the last action (e.g., action 3 of the first app 141) of the first app 141 is completed, the execution manager module 147 may transmit the execution request of the first action (e.g., action 1 of the second app 143) of the second app 143 to the execution service module 143a.

When the plurality of actions 141b and 143b are executed in the apps 141 and 143, the result screen according to the execution of each of the executed plurality of actions 141b and 143b may be displayed on the display 120. It may be that only a part of a plurality of result screens according to the executed plurality of actions 141b and 143b may be displayed on the display 120.

The memory 140 may store an intelligence app (e.g., a speech recognition app) operating in conjunction with the intelligence agent 145. The app operating in conjunction with the intelligence agent 145 may receive and process the utterance of the user as a voice signal. The app operating in conjunction with the intelligence agent 145 may be operated by a specific input (e.g., an input through a hardware key, an input through a touchscreen, or a specific voice input) input through the input module 110.

The intelligence agent 145, the execution manager module 147, or the intelligence service module 149 stored in the memory 140 may be performed by the processor 150. The functions of the intelligence agent 145, the execution manager module 147, or the intelligence service module 149 may be implemented by the processor 150. It is described that the function of each of the intelligence agent 145, the execution manager module 147, and the intelligence service module 149 is the operation of the processor 150. The intelligence agent 145, the execution manager module 147, or the intelligence service module 149 stored in the memory 140 may be implemented with hardware as well as software.

The processor 150 may control overall operations of the user terminal 100. For example, the processor 150 may control the input module 110 to receive the user input. The processor 150 may control the display 120 to display an image. The processor 150 may control the speaker 130 to output the voice signal. The processor 150 may control the memory 140 to execute a program and to read or store necessary information. The processor 150 may be operatively connected to the input module 110, the display 120, the speaker 130, and the memory 140. For example, the processor 150 may be electrically connected to the input module 110, the display 120, the speaker 130, and the memory 140.

The processor 150 may execute the intelligence agent 145, the execution manager module 147, or the intelligence service module 149 stored in the memory 140. As such, the processor 150 may implement the function of the intelligence agent 145, the execution manager module 147, or the intelligence service module 149.

The processor 150 may execute the intelligence agent 145 to generate an instruction for launching an app based on the voice signal received as the user input. The processor 150 may execute the execution manager module 147 to launch the apps 141 and 143 stored in the memory 140 depending on the generated instruction. The processor 150 may execute the intelligence service module 149 to manage information of a user and may process a user input, using the information of the user.

The processor 150 may execute the intelligence agent 145 to transmit a user input received through the input module 110 to the intelligence server 200 and may process the user input through the intelligence server 200.

Before transmitting the user input to the intelligence server 200, the processor 150 may execute the intelligence agent 145 to pre-process the user input. To pre-process the user input, the intelligence agent 145 may include an adaptive echo canceller (AEC) module, a noise suppression (NS) module, an end-point detection (EPD) module, or an automatic gain control (AGC) module. The AEC may remove an echo included in the user input. The NS module may suppress a background noise included in the user input. The EPD module may detect an end-point of a user voice included in the user input and may search for a part in which the user voice is present, using the detected end-point. The AGC module may recognize the user input and may adjust the volume of the user input so as to be suitable to process the recognized user input. The processor 150 may execute all the pre-processing configurations for performance. However, the processor 150 may execute a part of the pre-processing configurations to operate at low power.

The intelligence agent 145 may execute a wakeup recognition module stored in the memory 140 for the purpose of recognizing the call of a user. As such, the processor 150 may recognize the wakeup command of a user through the wakeup recognition module and may execute the intelligence agent 145 for receiving a user input when receiving the wakeup command. The wakeup recognition module may be implemented with a low-power processor (e.g., a processor included in an audio codec). When receiving a user input through a hardware key, the processor 150 may execute the intelligence agent 145. When the intelligence agent 145 is executed, an intelligence app (e.g., a speech recognition app) operating in conjunction with the intelligence agent 145 may be executed.

The intelligence agent 145 may include a speech recognition module for performing the user input. The processor 150 may recognize the user input for executing an action in an app through the speech recognition module. For example, the processor 150 may recognize a limited user (voice) input (e.g., an utterance such as "click" for performing a capture operation when a camera app is being executed) for performing an action such as the wakeup command in the apps 141 and 143 through the speech recognition module. For example, the processor 150 may assist the intelligence server 200 to recognize and rapidly process a user command capable of being processed in the user terminal 100 through the speech recognition module. The speech recognition module of the intelligence agent 145 for executing a user input may be implemented in an app processor.

The speech recognition module (including the speech recognition module of a wake up module) of the intelligence agent 145 may recognize the user input, using an algorithm for recognizing a voice. For example, the algorithm for recognizing the voice may be at least one of a hidden Markov model (HMM) algorithm, an artificial neural network (ANN) algorithm, or a dynamic time warping (DTW) algorithm.

The processor 150 may execute the intelligence agent 145 to convert the voice input of the user into text data. For example, the processor 150 may transmit the voice of the user to the intelligence server 200 through the intelligence agent 145 and may receive the text data corresponding to the voice of the user from the intelligence server 200. As such, the processor 150 may display the converted text data on the display 120.

The processor 150 may execute the intelligence agent 145 to receive a path rule from the intelligence server 200. The processor 150 may transmit the path rule to the execution manager module 147 through the intelligence agent 145.

The processor 150 may execute the intelligence agent 145 to transmit the execution result log according to the path rule received from the intelligence server 200 to the intelligence service module 149, and the transmitted execution result log may be accumulated and managed in preference information of the user of a persona module 149b.

The processor 150 may execute the execution manager module 147, may receive the path rule from the intelligence agent 145, and may execute the apps 141 and 143; and the processor 150 may allow the apps 141 and 143 to execute the actions 141b and 143b included in the path rule. For example, the processor 150 may transmit command information (e.g., path rule information) for executing the actions 141b and 143b to the apps 141 and 143, through the execution manager module 147; and the processor 150 may receive completion information of the actions 141b and 143b from the apps 141 and 143.

The processor 150 may execute the execution manager module 147 to transmit the command information (e.g., path rule information) for executing the actions 141b and 143b of the apps 141 and 143 between the intelligence agent 145 and the apps 141 and 143. The processor 150 may bind the apps 141 and 143 to be executed depending on the path rule through the execution manager module 147 and may transmit the command information (e.g., path rule information) of the actions 141b and 143b included in the path rule to the apps 141 and 143. For example, the processor 150 may sequentially transmit the actions 141b and 143b included in the path rule to the apps 141 and 143, through the execution manager module 147 and may sequentially execute the actions 141b and 143b of the apps 141 and 143 depending on the path rule.

The processor 150 may execute the execution manager module 147 to manage execution states of the actions 141b and 143b of the apps 141 and 143. For example, the processor 150 may receive information about the execution states of the actions 141b and 143b from the apps 141 and 143, through the execution manager module 147. For example, when the execution states of the actions 141b and 143b are in partial landing (e.g., when a parameter necessary for the actions 141b and 143b are not input), the processor 150 may transmit information about the partial landing to the intelligence agent 145, through the execution manager module 147. The processor 150 may make a request for an input of necessary information (e.g., parameter information) to the user by using the received information through the intelligence agent 145. For another example, when the execution state of each of the actions 141b and 143b is an operating state, the processor 150 may receive an utterance from the user through the intelligence agent 145. The processor 150 may transmit information about the apps 141 and 143 being executed and the execution states of the apps 141 and 143 to the intelligence agent 145, through the execution manager module 147. The processor 150 may transmit the user utterance to the intelligence server 200 through the intelligence agent 145. The processor 150 may receive parameter information of the utterance of the user from the intelligence server 200 through the intelligence agent 145. The processor 150 may transmit the received parameter information to the execution manager module 147 through the intelligence agent 145. The execution manager module 147 may change a parameter of each of the actions 141b and 143b to a new parameter by using the received parameter information.

The processor 150 may execute the execution manager module 147 to transmit parameter information included in the path rule to the apps 141 and 143. When the plurality of apps 141 and 143 are sequentially executed depending on the path rule, the execution manager module 147 may transmit the parameter information included in the path rule from one app to another app.

The processor may execute the execution manager module 147 to receive a plurality of path rules. The processor 150 may select a plurality of path rules based on the utterance of the user, through the execution manager module 147. For example, when the user utterance specifies a partial app 141 executing a partial action 141a but does not specify the other app 143 executing the remaining action 143b, the processor 150 may receive a plurality of different path rules, in which the same app 141 (e.g., a gallery app) executing the partial action 141a is executed and the different app 143 (e.g., a message app or a Telegram app) executing the remaining action 143b is executed, through the execution manager module 147. For example, the processor 150 may execute the same actions 141b and 143b (e.g., the same successive actions 141b and 143b) of the plurality of path rules, through the execution manager module 150. When the processor 150 executes the same action, the processor 150 may display a state screen for selecting the different apps 141 and 143 respectively included in the plurality of path rules in the display 120, through the execution manager module 147.

The intelligence service module 149 may include a context module 149a, a persona module 149b, or a suggestion module 149c.

The processor 150 may execute the context module 149a to collect current states of the apps 141 and 143 from the apps 141 and 143. For example, the processor 150 may execute the context module 149a to receive context information indicating the current states of the apps 141 and 143 and to collect the current states of the apps 141 and 143.

The processor 150 may execute the persona module 149b to manage personal information of the user utilizing the user terminal 100. For example, the processor 150 may execute the persona module 149b to collect the usage information and to manage personal information of the user, using the collected usage information of the user terminal 100 and the execution result.

The processor 150 may execute the suggestion module 149c to predict the intent of the user and to recommend a command to the user based on the intent of the user. For example, the processor 150 may execute the suggestion module 149c to recommend a command to the user depending on the current state (e.g., a time, a place, a situation, or an app) of the user.

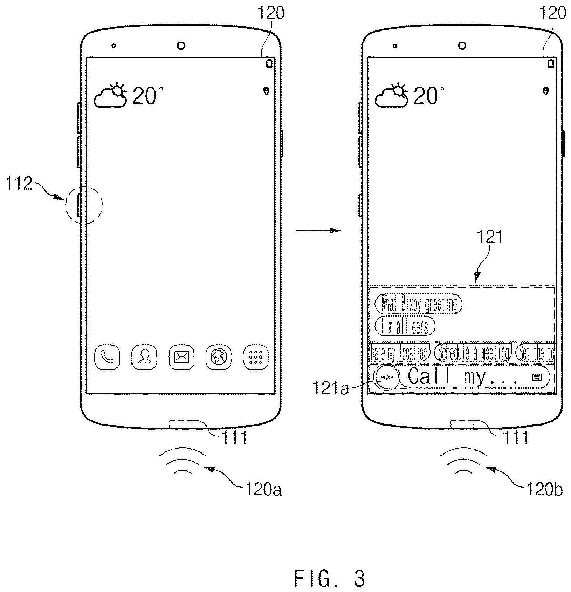

FIG. 3 is a view illustrating that an intelligence app of a user terminal is executed.

FIG. 3 illustrates that the user terminal 100 receives a user input to execute an intelligence app (e.g., a speech recognition app) operating in conjunction with the intelligence agent 145.

The user terminal 100 may execute the intelligence app for recognizing a voice through a hardware key 112. For example, when the user terminal 100 receives the user input through the hardware key 112, the user terminal 100 may display a UI 121 of the intelligence app on the display 120. For example, a user may touch a speech recognition button 121a on the UI 121 of the intelligence app for the purpose of entering (111b) a voice in a state where the UI 121 of the intelligence app is displayed on the display 120. For another example, while continuously pressing the hardware key 112 to enter (120b) the voice, the user may enter (120b) the voice.

The user terminal 100 executes the intelligence app for recognizing a voice through the microphone 111. For example, when a specified voice (e.g., wake up!) is entered (111a) through the microphone 111, the user terminal 100 may display the UI 121 of the intelligence app on the display 120.

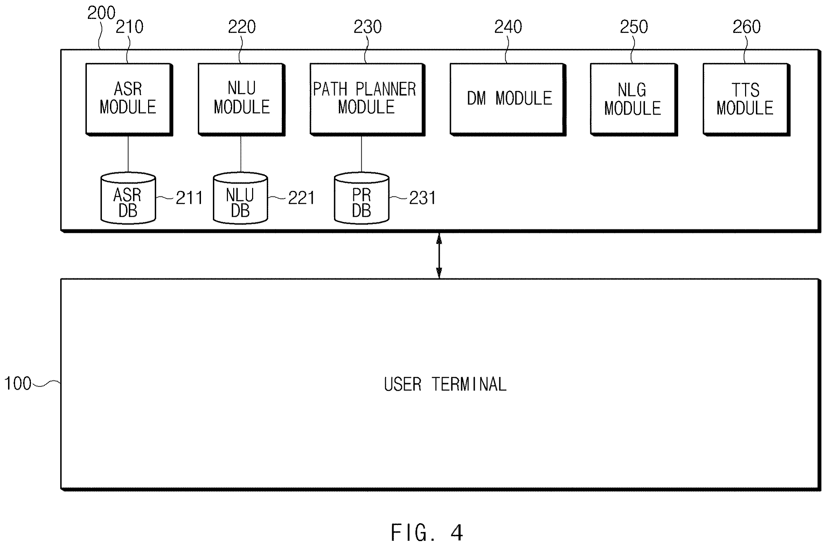

FIG. 4 is a block diagram illustrating an intelligence server of an integrated intelligence system.

Referring to FIG. 4, the intelligence server 200 may include an automatic speech recognition (ASR) module 210, a natural language understanding (NLU) module 220, a path planner module 230, a dialogue manager (DM) module 240, a natural language generator (NLG) module 250, or a text to speech (TTS) module 260. The intelligence server 200 may include a communication circuit, a memory, and a processor. The processor may execute the ASR module 210, the NLU module 220, the path planner module 230, the DM module 240, the NLG module 250, and the TTS module 260, which are stored in the memory, to perform a function. The intelligence server 200 may transmit or receive data (or information) to or from an external electronic device (e.g., the user terminal 100) through the communication circuit.

The NLU module 220 or the path planner module 230 of the intelligence server 200 may generate a path rule.

The ASR module 210 may change the user input received from the user terminal 100 to text data.

The ASR module 210 may convert the user input received from the user terminal 100 to text data. For example, the ASR module 210 may include a speech recognition module. The speech recognition module may include an acoustic model and a language model. For example, the acoustic model may include information associated with phonation, and the language model may include unit phoneme information and information about a combination of unit phoneme information. The speech recognition module may convert a user utterance into text data, using the information associated with phonation and unit phoneme information. For example, the information about the acoustic model and the language model may be stored in an automatic speech recognition database (ASR DB) 211.

The NLU module 220 may grasp user intent by performing syntactic analysis or semantic analysis. The syntactic analysis may divide the user input into syntactic units (e.g., words, phrases, morphemes, and the like) and determine which syntactic elements the divided units have. The semantic analysis may be performed by using semantic matching, rule matching, formula matching, or the like. As such, the NLU module 220 may obtain a domain, intent, or a parameter (or a slot) necessary to express the intent, from the user input.

The NLU module 220 may determine the intent of the user and parameter by using a matching rule that is divided into a domain, intent, and a parameter (or a slot) necessary to grasp the intent. For example, the one domain (e.g., an alarm) may include a plurality of intent (e.g., alarm settings, alarm cancellation, and the like), and one intent may include a plurality of parameters (e.g., a time, the number of iterations, an alarm sound, and the like). For example, the plurality of rules may include one or more necessary parameters. The matching rule may be stored in a natural language understanding database (NLU DB) 221.

The NLU module 220 may grasp the meaning of words extracted from a user input by using linguistic features (e.g., syntactic elements) such as morphemes, phrases, and the like and may match the grasped meaning of the words to the domain and intent to determine user intent. For example, the NLU module 220 may calculate how many words extracted from the user input is included in each of the domain and the intent, for the purpose of determining the user intent. The NLU module 220 may determine a parameter of the user input by using the words, which are based for grasping the intent. The NLU module 220 may determine the user intent by using the NLU DB 221 storing the linguistic features for grasping the intent of the user input. The NLU module 220 may determine the user intent by using a personal language model (PLM). For example, the NLU module 220 may determine the user intent by using the personalized information (e.g., a contact list or a music list). For example, the PLM may be stored in the NLU DB 221. The ASR module 210 as well as the NLU module 220 may recognize the voice of the user with reference to the PLM stored in the NLU DB 221.

The NLU module 220 generates a path rule based on the intent of the user input and the parameter. For example, the NLU module 220 may select an app to be executed, based on the intent of the user input and may determine an action to be executed, in the selected app. The NLU module 220 may determine the parameter corresponding to the determined action to generate the path rule. The path rule generated by the NLU module 220 includes information about the app to be executed, the action (e.g., at least one or more states) to be executed in the app, and a parameter necessary to execute the action.

The NLU module 220 generates one path rule, or a plurality of path rules based on the intent of the user input and the parameter. For example, the NLU module 220 may receive a path rule set corresponding to the user terminal 100 from the path planner module 230 and may map the intent of the user input and the parameter to the received path rule set to determine the path rule.

The NLU module 220 determines the app to be executed, the action to be executed in the app, and a parameter necessary to execute the action based on the intent of the user input and the parameter for the purpose of generating one path rule or a plurality of path rules. For example, the NLU module 220 may arrange the app to be executed and the action to be executed in the app by using information of the user terminal 100 depending on the intent of the user input in the form of ontology or a graph model for the purpose of generating the path rule. For example, the generated path rule may be stored in a path rule database (PR DB) 231 through the path planner module 230. The generated path rule may be added to a path rule set of the DB 231.

The NLU module 220 may select at least one path rule of the generated plurality of path rules. For example, the NLU module 220 may select an optimal path rule of the plurality of path rules. For another example, when only a part of action is specified based on the user utterance, the NLU module 220 may select a plurality of path rules. The NLU module 220 may determine one path rule of the plurality of path rules depending on an additional input of the user.

The NLU module 220 may transmit the path rule to the user terminal 100 at a request for the user input. For example, the NLU module 220 may transmit one path rule corresponding to the user input to the user terminal 100. For another example, the NLU module 220 may transmit the plurality of path rules corresponding to the user input to the user terminal 100. For example, when only a part of action is specified based on the user utterance, the plurality of path rules may be generated by the NLU module 220.

The path planner module 230 may select at least one path rule of the plurality of path rules.

The path planner module 230 may transmit a path rule set including the plurality of path rules to the NLU module 220. The plurality of path rules of the path rule set may be stored in the PR DB 231 connected to the path planner module 230 in the table form. For example, the path planner module 230 may transmit a path rule set corresponding to information (e.g., OS information or app information) of the user terminal 100, which is received from the intelligence agent 145, to the NLU module 220. For example, a table stored in the PR DB 231 may be stored for each domain or for each version of the domain.

The path planner module 230 may select one path rule or the plurality of path rules from the path rule set to transmit the selected one path rule or the selected plurality of path rules to the NLU module 220. For example, the path planner module 230 may match the user intent and the parameter to the path rule set corresponding to the user terminal 100 to select one path rule or a plurality of path rules and may transmit the selected one path rule or the selected plurality of path rules to the NLU module 220.

The path planner module 230 may generate the one path rule or the plurality of path rules by using the user intent and the parameter. For example, the path planner module 230 may determine the app to be executed and the action to be executed in the app based on the user intent and the parameter for the purpose of generating the one path rule or the plurality of path rules. According to an embodiment, the path planner module 230 may store the generated path rule in the PR DB 231.

The path planner module 230 may store the path rule generated by the NLU module 220 in the PR DB 231. The generated path rule may be added to the path rule set stored in the PR DB 231.

The table stored in the PR DB 231 may include a plurality of path rules or a plurality of path rule sets. The plurality of path rules or the plurality of path rule sets may reflect the kind, version, type, or characteristic of a device performing each path rule.

The DM module 240 may determine whether the user intent grasped by the NLU module 220 is definite. For example, the DM module 240 may determine whether the user intent is clear, based on whether the information of a parameter is sufficient. The DM module 240 may determine whether the parameter grasped by the NLU module 220 is sufficient to perform a task. According to an embodiment, when the user intent is not clear, the DM module 240 may perform a feedback for making a request for necessary information to the user. For example, the DM module 240 may perform a feedback for making a request for information about the parameter for grasping the user intent.

The DM module 240 may include a content provider module. When the content provider module executes an action based on the intent and the parameter grasped by the NLU module 220, the content provider module may generate the result obtained by performing a task corresponding to the user input. The DM module 240 may transmit the result generated by the content provider module as the response to the user input to the user terminal 100.

The NLG module 250 may change specified information to a text form. The information changed to the text form may be a form of a natural language speech. For example, the specified information may be information about an additional input, information for guiding the completion of an action corresponding to the user input, or information for guiding the additional input of the user (e.g., feedback information about the user input). The information changed to the text form may be displayed in the display 120 after being transmitted to the user terminal 100 or may be changed to a voice form after being transmitted to the TTS module 260.

The TTS module 260 may change information of the text form to information of a voice form. The TTS module 260 may receive the information of the text form from the NLG module 250, may change the information of the text form to the information of a voice form, and may transmit the information of the voice form to the user terminal 100. The user terminal 100 may output the information of the voice form to the speaker 130

The NLU module 220, the path planner module 230, and the DM module 240 may be implemented with one module. For example, the NLU module 220, the path planner module 230, and the DM module 240 may be implemented with one module, may determine the user intent and the parameter, and may generate a response (e.g., a path rule) corresponding to the determined user intent and parameter. As such, the generated response may be transmitted to the user terminal 100.

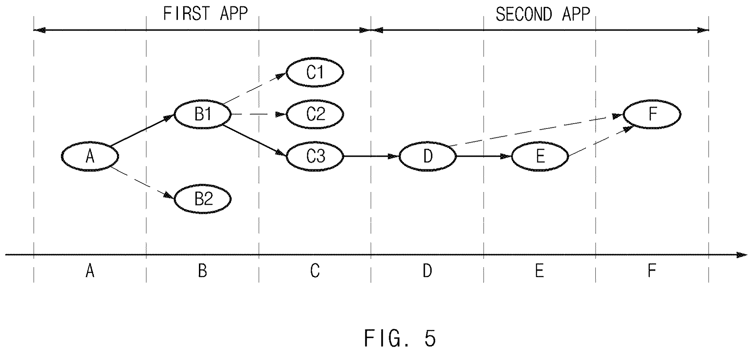

FIG. 5 is a diagram illustrating a path rule generating method of NLU.

Referring to FIG. 5, the NLU module 220 may divide the function of an app into any one action (e.g., state A to state F) and may store the divided unit actions in the PR DB 231. For example, the NLU module 220 may store a path rule set including a plurality of path rules A-B1-C1, A-B1-C2, A-B1-C3-D-F, and A-B1-C3-D-E-F, which are divided into actions (e.g., states), in the PR DB 231.

The PR DB 231 of the path planner module 230 may store the path rule set for performing the function of an app. The path rule set includes a plurality of path rules, each of which includes a plurality of actions (e.g., a sequence of states). The action executed depending on a parameter input to each of the plurality of actions may be sequentially arranged in each of the plurality of path rules. The plurality of path rules implemented in a form of ontology or a graph model may be stored in the PR DB 231.

The NLU module 220 may select an optimal path rule A-B1-C3-D-F of the plurality of path rules A-B1-C1, A-B1-C2, A-B1-C3-D-F, and A-B1-C3-D-E-F corresponding to the intent of a user input and the parameter.

When there is no path rule completely matched to the user input, the NLU module 220 may deliver a plurality of rules to the user terminal 100. For example, the NLU module 220 may select a path rule (e.g., A-B1) partly corresponding to the user input. The NLU module 220 may select one or more path rules (e.g., A-B1-C1, A-B1-C2, A-B1-C3-D-F, and A-B1-C3-D-E-F) including the path rule (e.g., A-B1) partly corresponding to the user input and may deliver the one or more path rules to the user terminal 100.

The NLU module 220 may select one of a plurality of path rules based on an input added by the user terminal 100 and may deliver the selected one path rule to the user terminal 100. For example, the NLU module 220 may select one path rule (e.g., A-B1-C3-D-F) of the plurality of path rules (e.g., A-B1-C1, A-B1-C2, A-B1-C3-D-F, and A-B1-C3-D-E-F) depending on the user input (e.g., an input for selecting C3) additionally entered by the user terminal 100 for the purpose of transmitting the selected one path rule to the user terminal 100.

The NLU module 220 may determine the intent of a user and the parameter corresponding to the user input (e.g., an input for selecting C3) additionally entered by the user terminal 100 for the purpose of transmitting the user intent or the parameter to the user terminal 100. The user terminal 100 may select one path rule (e.g., A-B1-C3-D-F) of the plurality of path rules (e.g., A-B1-C1, A-B1-C2, A-B1-C3-D-F, and A-B1-C3-D-E-F) based on the transmitted intent or the transmitted parameter.

As such, the user terminal 100 may complete the actions of the apps 141 and 143 based on the selected one path rule.

When a user input in which information is insufficient is received by the intelligence server 200, the NLU module 220 may generate a path rule partly corresponding to the received user input. For example, the NLU module 220 may transmit the partly corresponding path rule to the intelligence agent 145. The processor 150 may execute the intelligence agent 145 to receive the path rule and may deliver the partly corresponding path rule to the execution manager module 147. The processor 150 may execute the first app 141 depending on the path rule through the execution manager module 147. The processor 150 may transmit information about an insufficient parameter to the intelligence agent 145 through the execution manager module 147 while executing the first app 141. The processor 150 may make a request for an additional input to a user, using the information about the insufficient parameter, through the intelligence agent 145. When the additional input is received by the user through the intelligence agent 145, the processor 150 may transmit and process a user input to the intelligence server 200. The NLU module 220 may generate a path rule to be added, based on the intent of the user input additionally entered and parameter information and may transmit the path rule to be added, to the intelligence agent 145. The processor 150 may transmit the path rule to the execution manager module 147 through the intelligence agent 145 to execute the second app 143.

When a user input, in which a part of information is missing, is received by the intelligence server 200, the NLU module 220 may transmit a user information request to the personalization information server 300. The personalization information server 300 may transmit information of a user entering the user input stored in a persona database to the NLU module 220. The NLU module 220 may select a path rule corresponding to the user input in which a part of an action is partly missing, by using the user information. As such, even though the user input in which a portion of information is missing is received by the intelligence server 200, the NLU module 220 may make a request for the missing information to receive an additional input or may determine a path rule corresponding to the user input by using user information.

Table 1 attached below may indicate an exemplary form of a path rule associated with a task that a user requests.

**[Table 1]**

| Path rule ID | State | parameter |
|---|---|---|
| Gallery_101 | PictureView(25) | NULL |
| | SearchView(26) | NULL |
| | SearchViewResult(27) | Location, time |
| | SearchEmptySelectedView(28) | NULL |
| | SearchSelectedView(29) | ContentType,selectall |
| | CrossShare(30) | Anaphora |

Referring to Table 1, a path rule that is generated or selected by an intelligence server (the intelligence server 200 of FIG. 1) depending on user speech (e.g., "please share a picture") may include at least one state 25, 26, 27, 28, 29 or 30. For example, the at least one state (e.g., one operating state of a terminal) may correspond to at least one of picture application execution PicturesView 25, picture search function execution SearchView 26, search result display screen output SearchViewResult 27, search result display screen output, in which a picture is non-selected, SearchEmptySelectedView 28, search result display screen output, in which at least one picture is selected, SearchSelectedView 29, or share application selection screen output CrossShare 30.

Parameter information of the path rule may correspond to at least one state. For example, it is possible to be included in the state of SearchSelectedView 29, in which at least one picture is selected.

The task (e.g., "please share a picture!") that the user requests may be performed depending on the execution result of the path rule including the sequence of the states 25, 26, 27, 28, and 29.

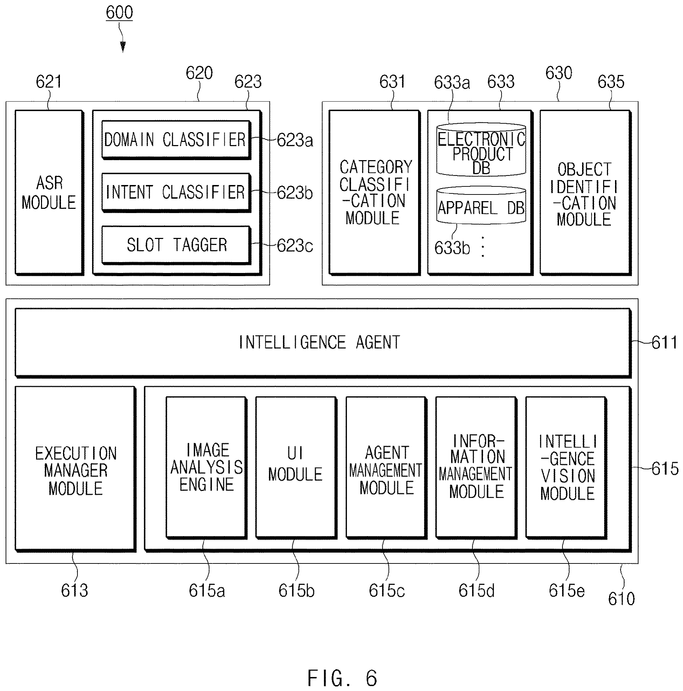

FIG. 6 is a block diagram illustrating an intelligence vision system.

Referring to FIG. 6, an intelligence vision system 600 may include a user terminal 610, an intelligence server 620, and a vision server 630. The intelligence vision system 600 may be a system further including the vision server 630 in the integrated intelligence system 10 of FIG. 1. The user terminal 610 and the intelligence server 620 of the intelligence vision system 600 may be similar to the user terminal 100 and the intelligence server 200 of the integrated intelligence system 10.

The user terminal 610 may include an intelligence agent 611, an execution manager module 613, and a vision agent 615. The intelligence agent 611 and the execution manager module 613 of the user terminal 610 may be similar to the intelligence agent 145 and the execution manager module 147 of the user terminal 100 of FIG. 1. For example, the intelligence agent 611, the execution manager module 613, and the vision agent 615 may be frameworks for processing a user utterance. The intelligence agent 611, the execution manager module 613, and the vision agent 615 may be stored in a memory. In other words, the intelligence agent 611, the execution manager module 613, and the vision agent 615 may be executed by a processor to implement a function.

The intelligence agent 611 may receive a user input (e.g., a user utterance). For example, the intelligence agent 611 may receive the user input associated with the image displayed on a display. For example, the image may include at least one object. The user input may include a request for performing a task associated with at least one object on the image. The image may be a preview image or a still image. The still image may be an image captured from the preview image.

The intelligence agent 611 may transmit the received user input to the intelligence server 620. The intelligence agent 611 may receive a first response corresponding to the user input from the intelligence server 620. For example, the first response may include a path rule including a sequence of states of the user terminal 610 and a parameter for executing an action for having the states. The intelligence agent 611 may deliver the received path rule to the execution manager module 613.

The execution manager module 613 may receive the path rule from the intelligence agent 611 and may execute an app according to the received path rule. The execution manager module 613 executes the vision agent 615 depending on the received path rule and executes an action of performing a task associated with an image.

The vision agent 615 may include an image analysis engine 615a, a user interface (UI) module 615b, an agent management module 615c, an information management module 615d, and an intelligence vision module 615e. The vision agent 615 may obtain information about an object on the image through the vision server 630.

The vision agent 615 may obtain the image generated through a camera (or a camera module). For example, the camera may include a lens and an image sensor module (ISP). The image sensor processor may generate an image using the light incident through the lens. The generated image may include a preview image and the captured image (or still image). The captured image may be an image captured from the preview image and then is stored in a memory. The preview image and the captured image may be resized. For example, the preview image may be resized depending on the resolution (e.g., full-high definition (FHD) or ultra-high definition (UHD)) of a display. The captured image may be resized to a resolution (e.g., the resolution higher than the resolution of the display) different from the resolution of the preview image. In addition, the captured image may be coded or decoded depending on the specified CODEC.

The vision agent 615 may obtain the still image received from the outside. For example, the image received from the outside may be the image received from an external electronic device or the image downloaded through a web or the like. The image received from the outside may be stored in the memory. An image analysis engine 615a may include an object detection engine, an object recognition engine, a range of interest (ROI) generate engine, and a tracking engine. The image analysis engine 615a may analyze the obtained image and may process the image based on the analyzed information (e.g., feature points, keywords (or parameters), or meta data). The object detection engine may detect the object included in the image. In other words, the object recognition engine may recognize the object (e.g., a kind of object) detected from the image. The ROI generate engine may generate the ROI of the image based on the recognized region. When the object's location is changed in a plurality of images (or when the object's movement is detected), the tracking engine may track the movement of the object. Accordingly, the image analysis engine 615a may generate an ROI including the object on the image.

The image analysis engine 615a may not only directly generate the ROI as described above, but also generate the ROI of the image through the vision server 630. For example, depending on the state of the user terminal 610, the image analysis engine 615a may transmit the image stored in the memory to the vision server 630 and may receive information about the ROI of the image from the vision server 630. For example, the ROI generated through the vision server 630 may be more accurate than the ROI directly generated by the image analysis engine 615a.

The image analysis engine 615a may generate an ROI for at least one object on the image. For example, the image analysis engine 615a may generate ROIs for not only a single object on the image but also a plurality of objects.

The image analysis engine 615a may store the generated ROI of the image in the memory (e.g., ROI database). The image analysis engine 615a may determine the ROI of the image displayed on the display, using the stored information.

The image analysis engine 615a may receive a user feedback in a procedure of processing an image. For example, the image analysis engine 615a may receive the user feedback on the generated ROI. The image analysis engine 615a may modify the ROI based on the user's feedback.

The UI module 615b may display a UI for providing a vision service on a display. For example, the UI module 615b may display a UI for providing the processed image to a user, on a display and may receive the user's feedback through the UI displayed on the display.

The agent management module 615c may determine whether to transmit a query, for information associated with the image. For example, the agent management module 615c may determine whether to transmit a query for obtaining information about the ROI of the image to the vision server 630. For another example, when receiving a user input for obtaining information about an object (e.g., product) on the image, the agent management module 615c may determine to transmit a query for obtaining the product information from the vision server 630 to a site (or server) (e.g., eBay or Amazon) capable of searching for the product information. For still another example, when an image with a high resolution is required for image analysis, the agent management module 615c may determine to transmit a query to obtain a high-resolution image to a camera module.

The information management module 615d may integrate the information recognized through the image analysis engine 615a. For example, the information management module 615d may integrate the information about the object recognized depending on the specified priority. For example, the specified priority may be determined depending on the recognition rate (or a recognition success rate). The objects with a high recognition rate such as QR code and a barcode may have high priority; the objects with a low recognition rate, such as document and scene text detection (STD) may have low priority. The information management module 615d may deliver the integrated information to another app. The app receiving the integrated information may transmit the integrated information to the vision server 630.

The intelligence vision module 615e may determine the category of the object on the image. For example, the intelligence vision module 615e may determine the category of the object on the image, based on the information analyzed by the image analysis module 615a. The intelligence vision module 615e may subdivide and determine the category (e.g., upper category and lower category) of the object. For another example, as described above, the intelligence vision module 615e may not only determine the category of the object directly but also may determine the category of the object on the image via the vision server 630. Determining the category of an object on the image via the vision server 630 may be more specific than the intelligence vision module 615e determines the category. The intelligence vision module 615e may store category information of the object on the image in a memory (e.g., category database) through a contents management hub. The vision agent 615 may transmit an image associated with a user input to the vision server 630. For example, the vision agent 615 may separate the ROI from the image and may transmit the image including the separated ROI to the vision server 630. For example, the image including the separated ROI may be an image including a region including a plurality of objects. When the vision agent 615 separates the ROI from the image, the vision agent 615 may transmit a small amount of data to the vision server 630.

The vision agent 615 may transmit a parameter included in a path rule together with the image. The parameter includes information indicating the object on the image. The vision server 630 may generate information about the object on the image by receiving the image and the parameter.

The vision agent 615 may receive a second response corresponding to the image associated with the user input and the parameter included in the path rule, from the vision server 630. For example, the second response may include information (or a second text) associated with a task performed depending on a path rule. The task may be obtained obtain information associated with the object on the image.

The intelligence server 620 may include an ASR module 621 and an NLU module 623. The ASR module 621 and the NLU module 623 of the intelligence server 620 may be similar to the ASR module 210 and the NLU module 220 of the intelligence server 200 of FIG. 4. The ASR module 621 and the NLU module 623 stored in a memory may be executed by a processor.

The ASR module 621 may convert a user input (e.g., a user utterance) to a text (or text data). The ASR module 621 may deliver the converted text to the NLU module 623.

The NLU module 623 may include a domain classifier 623a, an intent classifier 623b, and a slot tagger 623c. The NLU module 623 may receive a text corresponding to a user input and may generate a path rule corresponding to the user input. For example, the NLU module 623 may generate a path rule by receiving the text corresponding to the user input associated with the image.

The domain classifier 623a may determine the domain (e.g., an app) corresponding to the user input. For example, the domain classifier 623a may determine the vision agent 615 corresponding to the user input associated with the image. The intent classifier 623b may determine the intent of the user. For example, the intent classifier 623b may determine the intent of the user for obtaining information of an object (e.g., a product) on the image. The slot tagger 623c may extract a parameter (or a slot) necessary to perform an action according to the intent of the user. For example, the slot tagger 623c may extract a parameter indicating the object on the image. Accordingly, the NLU module 623 may generate (or select) a path rule based on the determined domain, the determined parameter, and the determined intent of the user.

The vision server 630 may include a category classification module 631, an object recognition module 633, and an object identification module 625. The vision server 630 may receive information about the parameter and the image associated with a user input, from the user terminal 100.

The category classification module 631 may receive the image associated with the user input and the parameter (or a first text) included in the path rule. The parameter is associated with the object on the image.

The category classification module 631 may determine the category of the object on the image. The category classification module 631 may determine that the object on the image is one of the plurality of specified categories. For example, the plurality of specified categories may include an upper category (e.g., electronic products) and a lower category (e.g., a refrigerator or a notebook) included in the upper category. In other words, the plurality of specified categories may be subdivided stepwise. Similarly to the intelligence vision module 615e of the user terminal 610, the category classification module 631 may determine the category of the object on the image. For example, the category classification module 631 may sequentially determine the upper category and lower category of the object on the image. When the category classification module 631 receives information about the category of the object on the image from the user terminal 610, the category classification module 631 may determine the category of the object, using the received information.

The object recognition module 633 may include an object recognizer corresponding to at least one category. The object recognizer may recognize the object on the image, using deep learning (or machine learning). For example, the object recognizer may extract the feature (or a feature point) of the image and may compare the feature of the image with the feature of the image stored in an index database to recognize an object. For example, the image stored in the index database may be a representative image corresponding to each type of object. The object recognition module 633 may recognize the object on the received image, using the object recognizer corresponding to the category determined through the category classification module 631. For example, the received image may be an image (e.g., an image including the ROI) delivered through the category determination module 631.

The object recognition module 633 may include a database corresponding to at least one category. For example, the object recognition module 633 may include an electronic product database 633a and an apparel database 633b. The database may include information about an object. For example, the information about the object may include model information, function information, price information, manufacturer information, or seller information of the corresponding product, when the object is a product. The object recognition module 633 may generate information about the recognized object. For example, the information associated with the recognized object may include list information including texts and images. When a plurality of objects are recognized, the object recognition module 633 may generate information about the plurality of objects.

Accordingly, the object recognition module 633 may obtain information associated with the object on the image from the database associated with the category determined by the category classification module 631.

The object identification module 635 obtains information associated with a user input from information obtained by the object recognition module 633, using a parameter. When generating information about a plurality of objects, the object identification module 635 may select information about an object (or an object desired by the user) associated with the parameter. For example, the object identification module 635 may compare the images of the plurality of objects recognized through the object recognition module 633 with images corresponding to the parameter to select information about the object of the most similar image. For another example, the object identification module 635 may compare the category of the plurality of objects determined through the category classification module 631 with the category of the parameter to select an object of the most similar category. For still another example, the object identification module 635 may select information about an object associated with the parameter, using data included in the information about the plurality of objects. For example, data included in the object information may include meta data, category data, and location data. The object identification module 635 may transmit information about the selected object among the information of the plurality of objects to the user terminal 610.

The object identification module 635 may transmit information corresponding to the selected object to the user terminal 610. For example, the object identification module 635 may select information corresponding to the selected object among the information about the object generated by the object recognition module 633 and may transmit the selected information to the user terminal 610. The user terminal 610 may receive the information about an object to display the information on a display. In addition, the user terminal 610 may transmit the information about the object to another electronic device (e.g., a display device) to display the information about the object through the display included in the other electronic device.

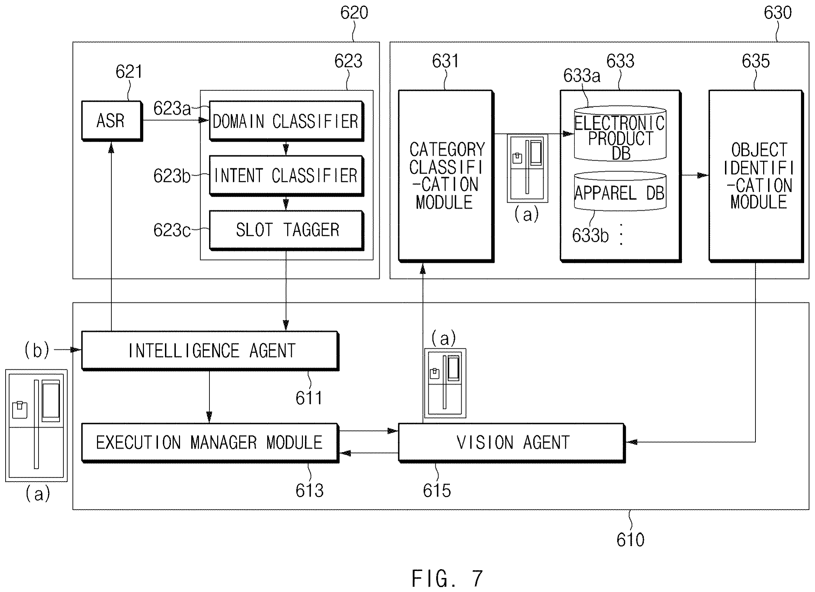

FIG. 7 is a diagram illustrating a process in which an intelligence vision system processes a user utterance, according to an example useful for understanding the claimed invention.

Referring to FIG. 7, the intelligence vision system 600 may receive a user input associated with an image and may provide a user with information about an object on the image.

According to an example, the user terminal 610 may display the image on a display. For example, the user terminal 610 may display an image (a) including a refrigerator on the display.

According to an example, the user terminal 610 (e.g., the intelligence agent 611) may receive the user input associated with the image displayed on the display. For example, the intelligence agent 611 may receive a user input (b) saying that "How much is it?" associated with a refrigerator displayed on the display.

According to an example, the user terminal 610 (e.g., the intelligence agent 611) may transmit the received user input to the intelligence server 620. For example, the user terminal 610 may transmit first data associated with the user input to the intelligence server 620.

According to an example, the intelligence server 620 (e.g., the ASR module 621) may receive the user input to convert the user input to a text.

According to an example, the intelligence server 620 (e.g., the NLU module 623) may generate a path rule corresponding the user input using the text. For example, the domain classifier 623a of the NLU module 623 may determine that the domain corresponding to the user input is a vision agent, using the text. The intent classifier 623b may determine that the intent of the user is a product search. Also, the slot tagger 625c may extract 'it' from the text. As such, the intelligence server 620 may generate a path rule for searching for a product on the image displayed in the display. According to an example, the intelligence server 620 may transmit the generated path rule to the user terminal 100.

According to an example, the user terminal 610 (e.g., the intelligence agent 611) may receive the generated path rule from the intelligence server 620. According to an example, the user terminal 610 (e.g., the execution manager module 613) may execute the vision agent 615 depending on the path rule. According to an example, the user terminal 610 (e.g., the vision agent 615) may execute an action included in the path rule. For example, the user terminal 610 may transmit second data associated with an image (e.g., refrigerator image (a)) associated with the user input and the parameter (e.g., `it') included in the received path rule, to the vision server 630.

According to an example, the vision server 630 (e.g., the category classification module 631) may receive an image associated with the user input and the parameter included in the path rule. For example, the category classification module 631 may receive the second data associated with the image and the parameter.

According to an example, the vision server 630 (e.g., the category classification module 631) may determine the category of the object on the image. For example, the category classification module 631 may determine that the category of the refrigerator on the image is an electronic product.

According to an example, the vision server 630 (e.g., the object recognition module 633) may recognize the object on the image, using an object recognizer of the determined category. For example, the object recognition module 633 may recognize that the object included in the image is a refrigerator, using an electronic product recognizer. According to an example, the vision server 630 may generate information corresponding to the recognized object. For example, the vision server 630 may generate information including at least one of model information, function information, price information, manufacturer information, and seller information of the recognized refrigerator. According to an example, because the vision server 630 (e.g., the object identification module 635) has a single recognized object, the vision server 630 may transmit the generated information to the user terminal 610 without the selection using a parameter.

According to an example, the user terminal 610 may receive the generated information and may output the received information through at least one of a display and a speaker. According to an embodiment, the user terminal 610 (e.g., the vision agent 615) may generate information indicating that the execution of the action according to the path rule is completed.

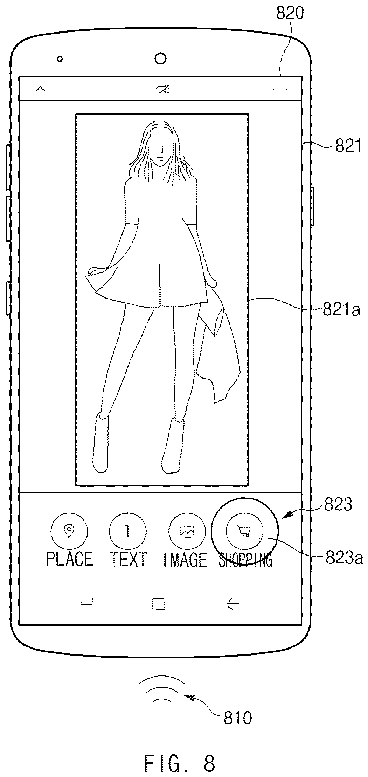

FIGS. 8, 9 and 10 are views illustrating that an intelligence vision system determines an ROI of an image, according to an example useful for understanding the claimed invention.

Referring to FIG. 8, the user terminal 610 may receive a user input for obtaining information about apparel on an image.

According to an example, in a state where the user terminal 610 displays the image on a display, the user terminal 610 may receive a user input 810 saying that "how much is an one-piece dress?". The image displayed on the display may include a plurality of objects (e.g., one-piece dresses, shoes, bags, and women).

According to an example, the user terminal 610 may execute the vision agent 615 depending on the path rule received from the intelligence server 620 and may display a UI 820 of the executed vision agent on the display. The UI 820 of the vision agent may include an image 821 associated with a user input and an indicator 823 displaying a task associated with an object on the image.

According to an example, the user terminal 610 may display the ROI on the image 821 associated with the user input. The user terminal 610 may determine a region including an object associated with the 'one-piece dress' being a parameter, as an ROI 821a. According to an example, the user terminal 610 may display an indicator 823a indicating a task of `searching for price information' associated with the object on the image.

According to an example, the user terminal 610 may receive information about the 'one-piece dress' that is an object on the image. The vision server 630 may receive information about the 'one-piece dress' among pieces of information about a plurality of objects, using a parameter. For example, the vision server 630 may receive information (e.g., one-piece dress list information) about the 'one-piece dress' that is an object associated with a user input, using metadata of information about a plurality of objects. According to an example, the user terminal may display information about the 'one-piece dress' on the display.

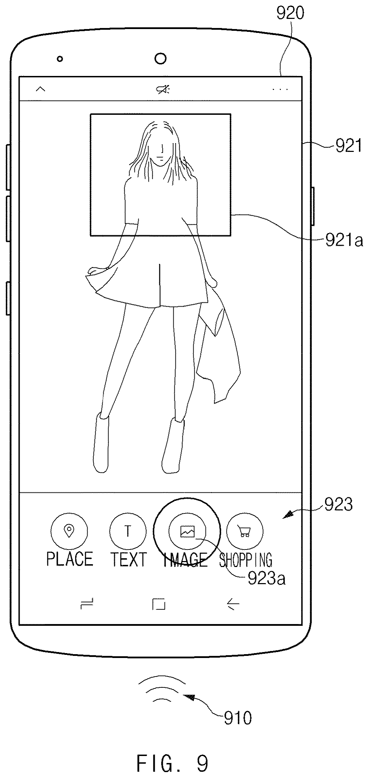

Referring to FIG. 9, the user terminal 610 may receive a user input for obtaining information about a woman on an image.

According to an example, in a state where the user terminal 610 displays an image on the display, the user terminal 610 may receive a user input 910a saying that "show another picture of this woman". The image displayed on the display may be the same image as the image displayed on the display of FIG. 8.

According to an example, the user terminal 610 may display a UI 920 of a vision agent on the display. The UI 920 of the vision agent may include an image 921 associated with a user input and an indicator 923 displaying a task associated with an object on the image.

According to an example, the user terminal 610 may display an ROI 921a on the image 921 associated with the user input. The user terminal 610 may determine a region including an object associated with `woman' being a parameter, as the ROI 921a. According to an example, the user terminal 610 may display the indicator 923a indicating a task for `searching for an image' associated with an object on the image.

According to an example, the user terminal 610 may receive information about the 'woman' that is an object on the image. The vision server 630 may receive information about the 'woman' among pieces of information about a plurality of objects, using a parameter. For example, the vision server 630 may receive information (e.g., a woman photo list) about the 'woman' that is an object associated with a user input, using category information of a plurality of objects. According to an example, the user terminal 100 may display the received information about the 'woman' on the display.

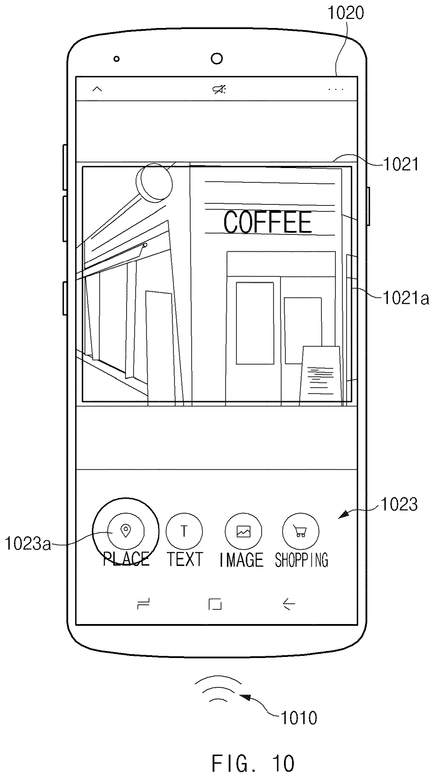

Referring to FIG. 10, the user terminal 610 may receive a user input for obtaining information about a cafe on an image.

According to an example, in a state where the user terminal 610 displays the image on a display, the user terminal 610 may receive a user input 1010 saying that "tell me information about this cafe". The image displayed on the display may include a plurality of objects (e.g., a plurality of shops). Furthermore, the image displayed on the display may include global positioning system (GPS) information. The GPS information may include information about the place where the image was captured.

According to an example, the user terminal 610 may display a UI 1020 of a vision agent on the display. The UI 1020 of the vision agent may include an image 1021 associated with a user input and an indicator 1023 displaying a task associated with an object on the image.

According to an example, the user terminal 610 may display an ROI 1021a on the image 1021 associated with the user input. The user terminal 610 may determine a region including an object associated with a `cafe' being a parameter, as the ROI 1021a. According to an example, the user terminal 610 may display an indicator 1023a indicating a task of `searching for place information' associated with the object on the image.

According to an example, the user terminal 610 may receive information about the `cafe' that is an object on the image. The vision server 630 may receive information about the `cafe' among pieces of information about a plurality of objects, using a parameter. For example, the vision server 630 may receive information (e.g., cafe list information) about `cafe' that is an object associated with the user input, using GPS information of a plurality of objects. According to an example, the user terminal 610 may display the received information about the `cafe' on the display.

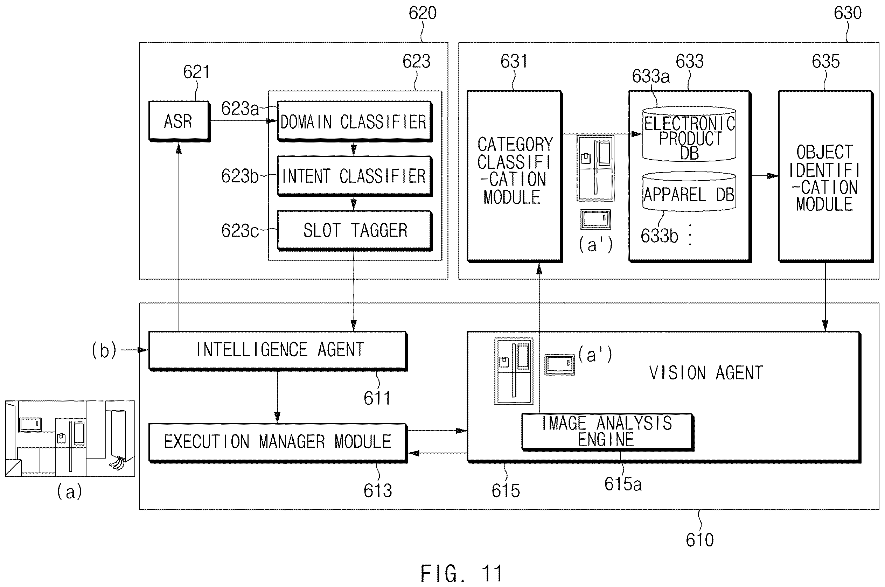

FIG. 11 is a diagram illustrating a process of providing information by classifying a category of an object included in an image in a vision server, according to an example useful for understanding the claimed invention.

Referring to FIG. 11, the user terminal 610 may determine the category of an object on an image in the vision server 630 to receive information about the object associated with a user input.

The user terminal 610 displays a still image on a display. For example, the image (a) may include a plurality of objects (e.g., a refrigerator and a microwave).

According to an example, the user terminal 610 (e.g., the intelligence agent 611) may receive "how much is a refrigerator?" (b). According to an example, the user terminal 610 may transmit the user input to the intelligence server 620.

According to an example, the intelligence server 620 (e.g., the ASR module 621) may convert the user input into a text. According to an example, the intelligence server 620 (e.g., the NLU module 623) may generate a path rule corresponding to the converted text through the domain classifier 623a, the intent classifier 623b, and the slot tagger 625c. For example, the path rule may include the sequence of states of the user terminal 610 for executing the action of the vision agent 615 and a 'refrigerator' which is a parameter for executing the action. According to an example, the intelligence server 620 may transmit the generated path rule to the user terminal 610.

According to an example, the user terminal 610 (e.g., the intelligence agent 611) may receive the generated path rule from the intelligence server 620. According to an example, the user terminal 610 (e.g., the execution manager module 613) may execute the vision agent 615 depending on the path rule. According to an example, the user terminal 610 (e.g., the vision agent 615) may determine the ROI of the image. For example, the vision agent 615 may determine an ROI including a 'refrigerator' and a 'microwave' from an image through the image analysis engine 615a and separate the image (a') including the ROI from the image. According to an example, the user terminal 610 may transmit an image including both the 'refrigerator' and the 'microwave' and the 'refrigerator' being a parameter, to the vision server 630.

According to an example, the vision server 630 (e.g., the category classification module 631) may receive parameters and a plurality of images respectively including a 'refrigerator' and a 'microwave'. According to an example, the vision server 630 may determine a category (e.g., an electronic product) of a 'refrigerator' and a 'microwave' included in the plurality of images. According to an example, the vision server 630 (e.g., the object recognition module 633) may recognize a 'refrigerator' and a 'microwave', using the recognizer of the determined category. The vision server 630 may generate information about the recognized `refrigerator' and the recognized 'microwave' in the database 633a of the electronic product. According to an example, the vision server 630 (e.g., the object identification module 635) may select information about the 'refrigerator' among the generated information, using 'refrigerator' that is a parameter. According to an example, the vision server 630 may transmit the generated information (e.g. a refrigerator list) to the user terminal 100.

According to an example, the user terminal 610 may receive the generated information and may output information about the 'refrigerator' through at least one of a display and a speaker.

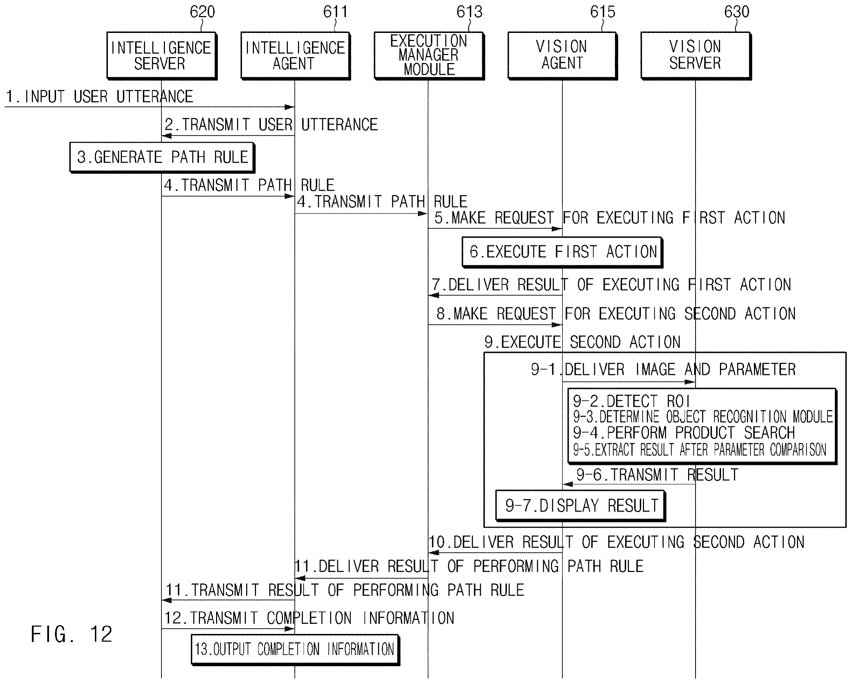

FIG. 12 is a sequence diagram of an intelligence vision system processing a user utterance associated with a preview image according to an example not in accordance with the literal wording of the claims.

Referring to FIG. 12, the user terminal 610 may receive information about an object (e.g., a refrigerator) on a preview image displayed on a display.

According to an example, the intelligence agent 611 of the user terminal 610 may receive "how much is a refrigerator?" (1). According to an example, the user terminal 620 may transmit a user utterance to the intelligence server 620 (2).

According to an example, the intelligence server 620 may generate a path rule corresponding to the user input (3). According to an example, the intelligence server 620 may transmit the generated path rule to the intelligence agent 611 of the user terminal 610 (4).

According to an example, the intelligence agent 611 of the user terminal 610 may deliver the path rule to the execution manager module 613 (4). According to an example, the execution manager module 613 may execute the vision agent 615 and may deliver a request for executing the first action (e.g., the action of capturing the preview image) depending on the path rule, to the vision agent 615 (5). According to an example, the vision agent 615 may execute the first action (6). In other words, when receiving the path rule, the vision agent 615 may capture the preview image displayed on the display. According to an example, the vision agent 615 may deliver the result of executing the first action to the execution manager module 613 (7). According to an example, the execution manager module 613 may deliver a request for executing a second action (e.g., an action of displaying information of a refrigerator on the display) to the vision agent 615 (8).

According to an example, the vision agent 615 may execute the second action (9). According to an example, the user terminal 610 may receive information for executing the second action from the vision server 630. According to an example, the vision agent 615 of the user terminal 610 may transmit the captured image and the 'refrigerator' being a parameter, to the vision server 630 (9-1). According to an example, the vision server 630 may determine the ROI of the captured image (9-2). The vision server 630 may determine the category (e.g., an electronic product) of the object included in the ROI and may recognize the 'refrigerator' and the 'microwave', using the recognizer of the determined category (9-3). According to an example, the vision server 630 may generate (or search for) information about the recognized `refrigerator' and the recognized 'microwave' (9-4). According to an example, the vision server 630 may select information (e.g., a refrigerator list) about the 'refrigerator' among pieces of information about the plurality of objects generated using the parameter (9-5). According to an example, the vision server 630 may transmit the selected information to the user terminal 610 (9-6).

According to an example, the user terminal 610 may receive the selected information and may display information about the 'refrigerator' on the display (9-7). In other words, the user terminal 610 may complete the execution of the second action.

According to an example, the user terminal 610 may deliver the result of executing the second action to the execution manager module 613 (10). According to an example, the execution manager module 613 may transmit the result of performing a task corresponding to a user input depending on a path rule to the vision server 620 through the intelligence agent 611 (11). According to an example, the vision server 620 may transmit the results to the user terminal 100 via an NLG module (12). The user terminal 610 may output the completion information to the user in the form of a natural language (13).

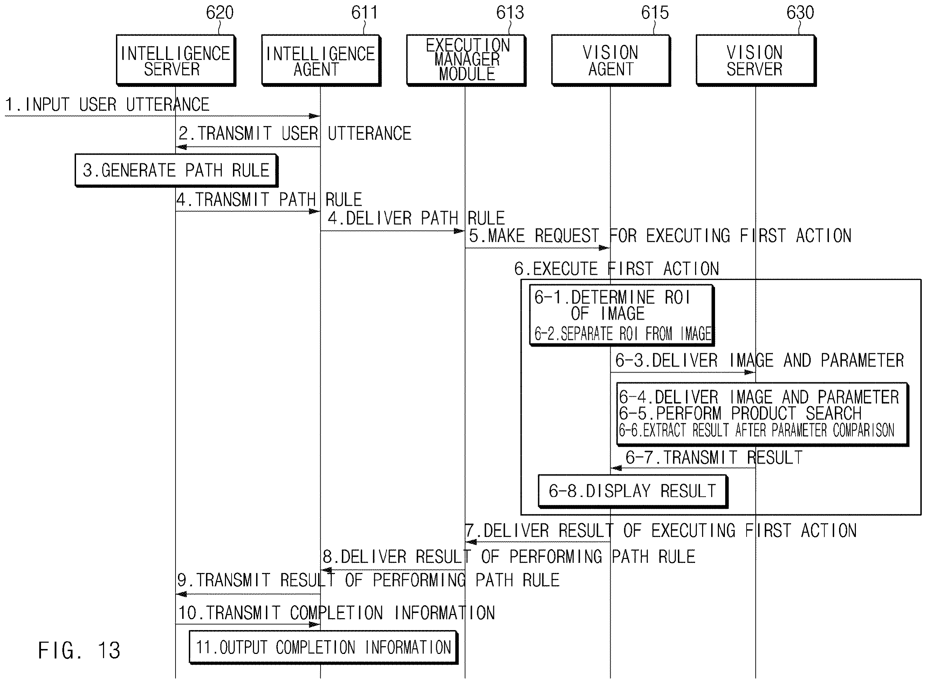

FIG. 13 is a sequence diagram of an intelligence vision system processing of a user utterance associated with an image, according to an embodiment of the claimed invention.

Referring to FIG. 13, the user terminal 610 receives information about an object (e.g., a refrigerator) on a still image displayed on a display. The operations of the user terminal 610 and the intelligence server 620 may be similar to the operations of the user terminal 610 and the intelligence server 620 of FIG. 12.

According to an embodiment, operations (1) to (4) between the user terminal 610 and the intelligence server 620 are similar to operations (1) to (4) between the user terminal 610 and the intelligence server 620 of FIG. 12.

According to an embodiment, the execution manager module 613 executes the vision agent 615 and delivers a request for executing an action (e.g., an action of displaying information of a refrigerator on the display) depending on a path rule, to the vision agent 615. (5). According to an embodiment, the vision agent 615 executes the action (6). According to an embodiment, unlike the illustration of FIG. 12, the vision agent 615 may omit an action of capturing the image displayed on the display.

According to an embodiment, the user terminal 610 receives information for executing the action from the vision server 630. According to an embodiment, the vision agent 615 of the user terminal 610 determines the ROI of the still image (6-1). The vision agent 615 determines the ROI, using information (e.g. category information and ROI information) associated with the image displayed on the display. According to an embodiment, the vision agent 615 of the user terminal 610 may separate the ROI from the image (6-2). According to an embodiment, the user terminal 610 transmits an image including the ROI and the 'refrigerator' being a parameter, to the vision server 630 (6-3).

According to an embodiment, the vision server 630 determines the category (e.g., an electronic product) of the object included in the image including the ROI and may recognize 'the refrigerator' and the 'microwave' (6-4). According to an embodiment, the vision server 630 generates (or search for) information about the recognized `refrigerator' and the recognized 'microwave' (6-5). According to an embodiment, the vision server 630 selects information (e.g., a refrigerator list) about the 'refrigerator' among pieces of information about the plurality of objects generated using the parameter (6-6). According to an embodiment, the vision server 630 transmits the selected information to the user terminal 610 (6-7).

According to an embodiment, the user terminal 610 receives the selected information and may display information about the 'refrigerator' on the display (6-8). In other words, the user terminal 610 may complete the execution of the second action.

According to an embodiment, operations (7) to 11 of the user terminal 610, the intelligence server 620, and the vision server 630 may be similar to operations (10) to (13) of the vision server of FIG. 12.

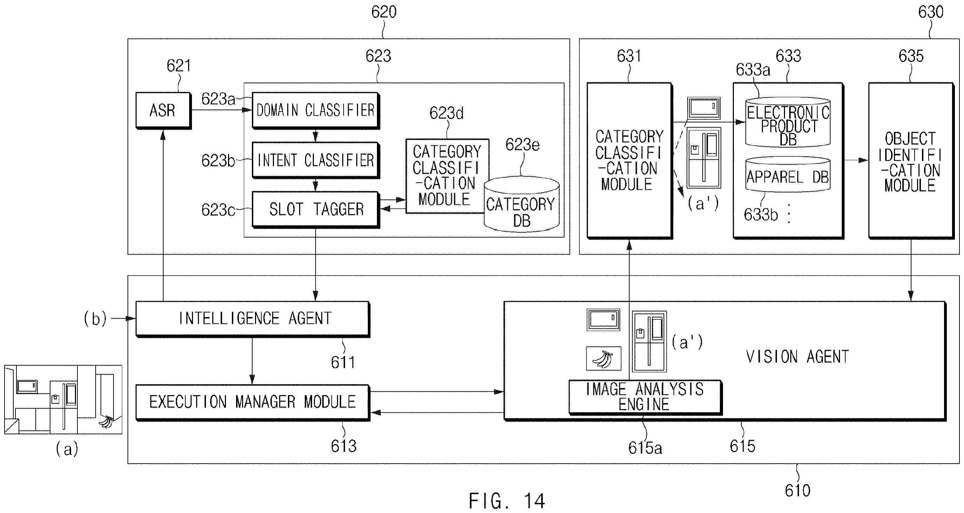

FIG. 14 is a diagram illustrating a process of providing information by classifying a category of an object included in an image in an intelligence server, according to an example useful for understanding the claimed invention.

Referring to FIG. 14, the user terminal 610 may determine the category of an object on an image in the intelligence server 620 to receive information about the object associated with a user input. The intelligence server 620 may further include a category classification module 623d for determining the category of the extracted parameter and a category database 623e. For example, the category classification module 623d and the category database 623e may be included in the NLU module 623.

According to an example, the user terminal 610 may display an image (e.g., a refrigerator, a microwave, and a banana) (a) including a plurality of objects on a display.

According to an example, the user terminal 610 (e.g., the intelligence agent 611) may receive "how much is a refrigerator?" (b). According to an example, the user terminal 610 may transmit the user input to the intelligence server 620. For example, the user terminal 610 may transmit first data associated with the user input to the intelligence server 620.

According to an example, the intelligence server 620 (e.g., the ASR module 621) may convert the user input into a text. According to an example, the intelligence server 620 (e.g., the NLU module 623) may generate a path rule corresponding to the converted text through the domain classifier 623a, the intent classifier 623b, and the slot tagger 625c.

According to an example, the NLU module 623 of the intelligence server 620 may transmit information about the first parameter (or a first text) (e.g., a refrigerator) extracted through the slot tagger 625c, to the category classification module 623d. The category classification module 623d may determine the category for the first parameter. The category classification module 623d may determine the category (e.g., an electronic device) of the first parameter with reference to the category database 623e in which information about the category is stored. For example, the category database 623e may store information about the name of an object corresponding to at least one category. The category classification module 623d may compare the first parameter with the name of the object to determine that the category corresponding to the most similar name is the category of the first parameter. According to an example, the category classification module 623d may deliver the determined category to the slot tagger 625c. The category classification module 623d may determine that the delivered category is a second parameter (or a third text). Accordingly, the path rule generated through the NLU module 623 may include a first parameter (e.g., a refrigerator) and a second parameter (e.g., an electronic product).

According to an example, the intelligence server 620 may transmit the generated path rule to the user terminal 610.

According to an example, the user terminal 610 (e.g., the intelligence agent 611) may receive the generated path rule from the intelligence server 620. According to an example, the user terminal 610 (e.g., the execution manager module 613) may execute the vision agent 615 depending on the path rule. According to an example, the user terminal 610 (e.g., the vision agent 615) may determine the region including a `refrigerator', a 'microwave', and a 'banana' and may separate the image (a') including the ROI in the image. According to an example, the user terminal 610 may select an image including each of the 'refrigerator' and the 'microwave' from among images including the `refrigerator', the 'microwave', and the 'banana', using the second parameter (e.g., home appliances) included in the path rule and may transmit the selected image to the vision server 630. For example, the user terminal 610 may transmit the image including an object and the second data associated with a second parameter as well as a first parameter, to the vision server 630.

According to an example, the vision server 630 (e.g., the category classification module 631) may receive a plurality of images including each of a 'refrigerator' and a 'microwave', the first parameter, and the second parameter. According to an example, the vision server 630 (e.g., the category classification module 631) recognizes the 'refrigerator' and the 'microwave' included in the plurality of images, using the second parameter (e.g., an electronic product). In other words, the vision server 630 may recognize the 'refrigerator' and the 'microwave' included in the plurality of images using the second parameter determined by the intelligence server 620 without re-determining the category of the object included in the image. The vision server 630 generates information about the recognized `refrigerator' and the recognized 'microwave' in the database 633a of the electronic product. According to an example, the vision server 630 (e.g., the object identification module 635) may select information about the 'refrigerator' among the generated information, using 'refrigerator' that is the first parameter. According to an example, the vision server 630 may transmit the generated information (or a second text) (e.g. a refrigerator list) to the user terminal 100.

According to an example, the user terminal 610 may receive the generated information and may output information about the 'refrigerator' through at least one of a display and a speaker.

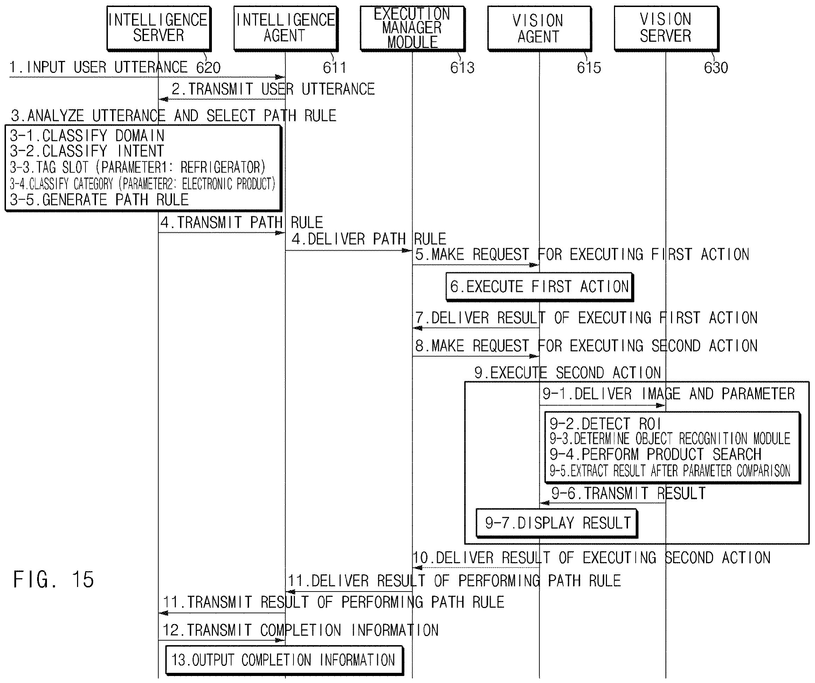

FIG. 15 is a sequence diagram of an intelligence vision system processing a user utterance associated with a preview image through a camera app, according to an example not in accordance with the literal wording of the claims.

Referring to FIG. 15, the user terminal 610 may receive information about an object (e.g., a refrigerator) on a preview image displayed on a display.

According to an example, the intelligence agent 611 of the user terminal 610 may receive "how much is a refrigerator?" (1). According to an example, the user terminal 620 may transmit a user utterance to the intelligence server 620 (2).

According to an example, the intelligence server 620 may generate a path rule corresponding to the user input (3). For example, the domain classifier 623a of the NLU module 623 may determine a domain (e.g., the vision agent 615) corresponding to the user input (3-1). The intent classifier 623b may determine the intent (e.g., product search) corresponding to the user input (3-2). The slot tagger 623c may extract 'refrigerator' that is the first parameter (3-3). The slot tagger 623c may deliver the first parameter to the category classification module 623d. The category classification module 623d may determine the category of the first parameter (e.g. home appliances), using information stored in the category database 623e. The category classification module 623d may deliver the determined category to the slot tagger 623c. The slot tagger 623c may determine the determined category as the second parameter (3-4). According to an example, the intelligence server 620 may generate a path rule including the first parameter and the second parameter (3-5). According to an example, the intelligence server 620 may transmit the generated path rule to the intelligence agent 611 of the user terminal 610 (4).

According to an example, operations (5) to (8) between the user terminal 610 and the vision server 630 may be similar to operations (5) to (8) between the user terminal 610 and the vision server 630 of FIG. 12.

According to an example, the vision agent 615 may execute the second action (9). According to an example, the user terminal 610 may receive information for executing the second action from the vision server 630. According to an example, the vision agent 615 of the user terminal 610 may transmit the captured image, the 'refrigerator' being the first parameter, and 'an electronic product' being the second parameter, to the vision server 630 (9-1). According to an example, the vision server 630 may determine the ROI of the captured image (9-2). The vision server 630 may determine the category (e.g., an electronic product) of the object included in the ROI, using an 'electronic product' that is the second parameter and may recognize the `refrigerator' and the 'microwave', using the recognizer of the determined category (9-3). According to an example, the vision server 630 may generate (or search for) information about the recognized `refrigerator' and the recognized 'microwave' (9-4). According to an example, the vision server 630 may select information (e.g., a refrigerator list) about the 'refrigerator' among pieces of information about the plurality of objects generated using the first parameter (9-5). According to an example, the vision server 630 may transmit the selected information to the user terminal 610 (9-6).

According to an example, the user terminal 610 may receive the selected information and may display information about the 'refrigerator' on the display (9-7). In other words, the user terminal 610 may execute the second action.

According to an example, operations (10) to (13) between the user terminal 610 and the intelligence server 620 may be similar to operations (10) to (13) between the user terminal 610 and the intelligence server 620 of FIG. 12.

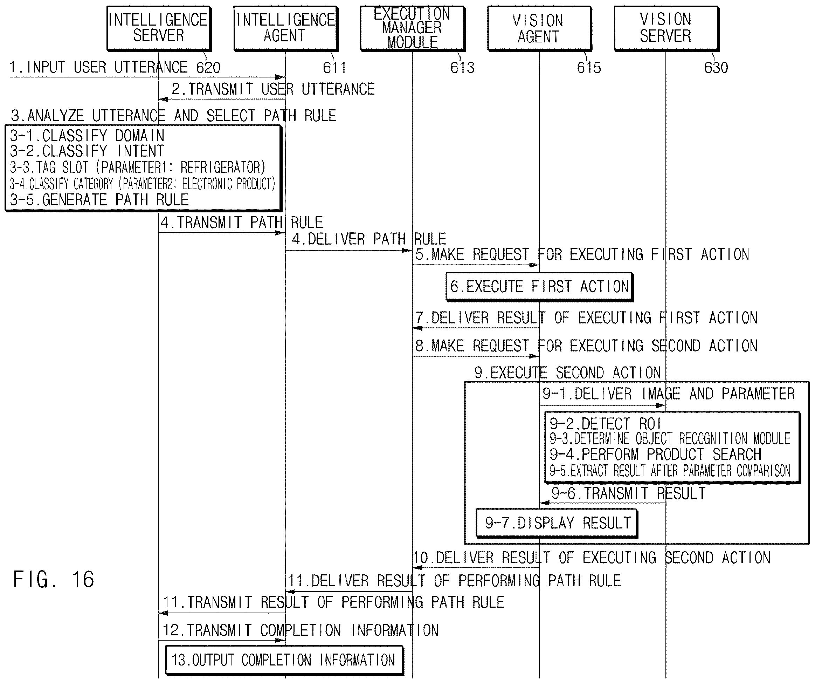

FIG. 16 is a sequence diagram of an intelligence vision system processing of a user utterance associated with an image through a gallery app, according to an example not in accordance with the literal wording of the claimed invention.

Referring to FIG. 16, the user terminal 610 may receive information about an object (e.g., a refrigerator) on a still image displayed on a display. The operations of the user terminal 610 and the intelligence server 620 may be similar to the operations of the user terminal 610 and the intelligence server 620 of FIG. 15.

According to an example, operations (1) to (4) between the user terminal 610 and the intelligence server 620 may be similar to operations (1) to (4) between the user terminal 610 and the intelligence server 620 of FIG. 15. For example, the path rule generated in operations (3-1) to (3-5) of the intelligence server 620 may include a 'refrigerator' being a first parameter and a 'home appliance' being a second parameter.

According to an example, the execution manager module 613 may execute the vision agent 615 and may deliver a request for executing an action (e.g., an action of displaying information of a refrigerator on the display) depending on a path rule, to the vision agent 615. (5). According to an example, the vision agent 615 may execute the action (6). According to an example, unlike the illustration of FIG. 15, the vision agent 615 may omit an action of capturing the image displayed on the display.

According to an example, the user terminal 610 may receive information for executing the action from the vision server 630. According to an example, the vision agent 615 of the user terminal 610 may determine the ROI of the still image (6-1). The vision agent 615 may determine the ROI, using information (e.g. category information and ROI information) associated with the image displayed on the display. According to an example, the vision agent 615 of the user terminal 610 may separate the ROI from the image (6-2). According to an example, the user terminal 610 may transmit an image including the ROI, the 'refrigerator' being the first parameter, and 'an electronic product' being the second parameter, to the vision server 630 (6-3).

According to an example, the vision server 630 may determine the category (e.g., an electronic product) of the object included in the ROI, using an `electronic product' that is the second parameter and may recognize the 'refrigerator' and the 'microwave', using the recognizer of the determined category (6-4). According to an example, the vision server 630 may generate (or search for) information about the recognized `refrigerator' and the recognized 'microwave' (6-5). According to an example, the vision server 630 may select information (e.g., a refrigerator list) about the 'refrigerator' among pieces of information about the plurality of objects generated using the parameter (6-6). According to an embodiment, the vision server 630 may transmit the selected information to the user terminal 610 (6-7).

According to an example, the user terminal 610 may receive the selected information and may display information about the 'refrigerator' on the display (6-8).

According to an example, operations (7) to 11 of the user terminal 610, the intelligence server 620, and the vision server 630 may be similar to operations (10) to (13) of the vision server of FIG. 15.

According to various embodiments of the disclosure described with reference to FIGS. 1 to 16, when the user terminal 610 receives a user utterance associated with an image on an image, the user terminal 610 may recognize the object on the image by analyzing the image through the vision server 630, may generate information associated with the recognized object to provide a user with the information, and may organically process the image displayed on a screen and the user utterance.

The user terminal 610 may recognize the category of the object, may generate information about the object on the image, using the recognizer and information of the recognized category, and may efficiently provide information about the object associated with a user input. Furthermore, when the image includes a plurality of objects, the user terminal 610 may recognize a text for specifying an object included in a user input to select one of the plurality of objects and may provide the user with information about the selected object.

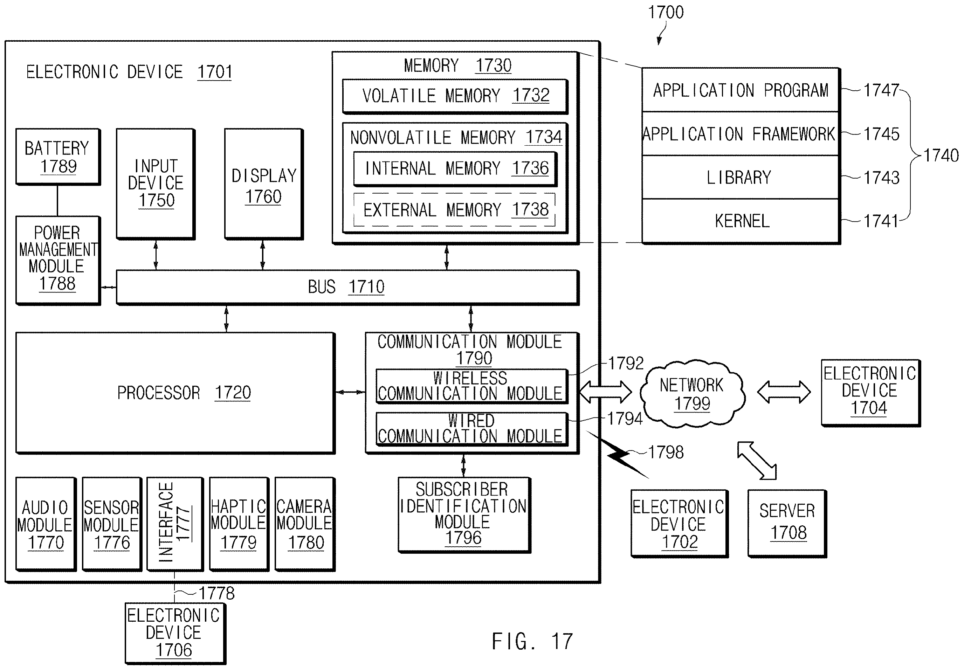

FIG. 17 illustrates a block diagram of an electronic device 1701 in a network environment 1700, according to various embodiments. An electronic device according to various embodiments of the disclosure may include various forms of devices. For example, the electronic device may include at least one of, for example, portable communication devices (e.g., smartphones), computer devices (e.g., personal digital assistants (PDAs), tablet personal computers (PCs), laptop PCs, desktop PCs, workstations, or servers), portable multimedia devices (e.g., electronic book readers or Motion Picture Experts Group (MPEG-1 or MPEG-2) Audio Layer 3 (MP3) players), portable medical devices (e.g., heartbeat measuring devices, blood glucose monitoring devices, blood pressure measuring devices, and body temperature measuring devices), cameras, or wearable devices. The wearable device may include at least one of an accessory type (e.g., watches, rings, bracelets, anklets, necklaces, glasses, contact lens, or head-mounted-devices (HMDs)), a fabric or garment-integrated type (e.g., an electronic apparel), a body-attached type (e.g., a skin pad or tattoos), or a bio-implantable type (e.g., an implantable circuit). According to various embodiments, the electronic device may include at least one of, for example, televisions (TVs), digital versatile disk (DVD) players, audios, audio accessory devices (e.g., speakers, headphones, or headsets), refrigerators, air conditioners, cleaners, ovens, microwave ovens, washing machines, air cleaners, set-top boxes, home automation control panels, security control panels, game consoles, electronic dictionaries, electronic keys, camcorders, or electronic picture frames.

In another embodiment, the electronic device may include at least one of navigation devices, satellite navigation system (e.g., Global Navigation Satellite System (GNSS)), event data recorders (EDRs) (e.g., black box for a car, a ship, or a plane), vehicle infotainment devices (e.g., head-up display for vehicle), industrial or home robots, drones, automated teller machines (ATMs), points of sales (POSs), measuring instruments (e.g., water meters, electricity meters, or gas meters), or internet of things (e.g., light bulbs, sprinkler devices, fire alarms, thermostats, or street lamps). The electronic device according to an embodiment of the disclosure may not be limited to the above-described devices, and may provide functions of a plurality of devices like smartphones which have measurement function of personal biometric information (e.g., heart rate or blood glucose). In the disclosure, the term "user" may refer to a person who uses an electronic device or may refer to a device (e.g., an artificial intelligence electronic device) that uses the electronic device.

Referring to FIG. 17, under the network environment 1700, the electronic device 1701 (e.g., the electronic device 100) may communicate with an electronic device 1702 through local wireless communication 1798 or may communication with an electronic device 1704 or a server 1708 through a network 1799. According to an embodiment, the electronic device 1701 may communicate with the electronic device 1704 through the server 1708.

According to an embodiment, the electronic device 1701 may include a bus 1710, a processor 1720 (e.g., the processor 150), a memory 1730, an input device 1750 (e.g., a microphone or a mouse), a display device 1760, an audio module 1770, a sensor module 1776, an interface 1777, a haptic module 1779, a camera module 1780, a power management module 1788, a battery 1789, a communication module 1790, and a subscriber identification module 1796. According to an embodiment, the electronic device 1701 may not include at least one (e.g., the display device 1760 or the camera module 1780) of the above-described components or may further include other component(s).

The bus 1710 may interconnect the above-described components 1720 to 1790 and may include a circuit for conveying signals (e.g., a control message or data) between the above-described components.

The processor 1720 may include one or more of a central processing unit (CPU), an application processor (AP), a graphic processing unit (GPU), an image signal processor (ISP) of a camera or a communication processor (CP). According to an embodiment, the processor 1720 may be implemented with a system on chip (SoC) or a system in package (SiP). For example, the processor 1720 may drive an operating system (OS) or an application program to control at least one of another component (e.g., hardware or software component) of the electronic device 1701 connected to the processor 1720 and may process and compute various data. The processor 1720 may load a command or data, which is received from at least one of other components (e.g., the communication module 1790), into a volatile memory 1732 to process the command or data and may store the result data into a nonvolatile memory 1734.

The memory 1730 may include, for example, the volatile memory 1732 or the nonvolatile memory 1734. The volatile memory 1732 may include, for example, a random access memory (RAM) (e.g., a dynamic RAM (DRAM), a static RAM (SRAM), or a synchronous DRAM (SDRAM)). The nonvolatile memory 1734 may include, for example, a programmable read-only memory (PROM), an one time PROM (OTPROM), an erasable PROM (EPROM), an electrically EPROM (EEPROM), a mask ROM, a flash ROM, a flash memory, a hard disk drive (HDD), or a solid-state drive (SSD). In addition, the nonvolatile memory 1734 may be configured in the form of an internal memory 1736 or the form of an external memory 1738 which is available through connection only if necessary, according to the connection with the electronic device 1701. The external memory 1738 may further include a flash drive such as compact flash (CF), secure digital (SD), micro secure digital (Micro-SD), mini secure digital (Mini-SD), extreme digital (xD), a multimedia card (MMC), or a memory stick. The external memory 1738 may be operatively or physically connected with the electronic device 1701 in a wired manner (e.g., a cable or a universal serial bus (USB)) or a wireless (e.g., Bluetooth) manner.

For example, the memory 1730 may store, for example, at least one different software component, such as a command or data associated with the program 1740, of the electronic device 1701. The program 1740 may include, for example, a kernel 1741, a library 1743, an application framework 1745 or an application program (interchangeably, "application") 1747.

The input device 1750 may include a microphone, a mouse, or a keyboard. According to an embodiment, the keyboard may include a keyboard physically connected or a virtual keyboard displayed through the display device 1760.

The display device 1760 may include a display, a hologram device or a projector, and a control circuit to control a relevant device. The display may include, for example, a liquid crystal display (LCD), a light emitting diode (LED) display, an organic LED (OLED) display, a microelectromechanical systems (MEMS) display, or an electronic paper display. According to an embodiment, the display may be flexibly, transparently, or wearably implemented. The display may include a touch circuitry, which is able to detect a user's input such as a gesture input, a proximity input, or a hovering input or a pressure sensor (interchangeably, a force sensor) which is able to measure the intensity of the pressure by the touch. The touch circuit or the pressure sensor may be implemented integrally with the display or may be implemented with at least one sensor separately from the display. The hologram device may show a stereoscopic image in a space using interference of light. The projector may project light onto a screen to display an image. The screen may be located inside or outside the electronic device 1701.

The audio module 1770 may convert, for example, from a sound into an electrical signal or from an electrical signal into the sound. According to an embodiment, the audio module 1770 may obtain sound through the input device 1750 (e.g., a microphone) or may output sound through an output device (not illustrated) (e.g., a speaker or a receiver) included in the electronic device 1701, an external electronic device (e.g., the electronic device 1702 (e.g., a wireless speaker or a wireless headphone)) or an electronic device 1706 (e.g., a wired speaker or a wired headphone) connected with the electronic device 1701

The sensor module 1776 may measure or detect, for example, an internal operating state (e.g., power or temperature) of the electronic device 1701 or an external environment state (e.g., an altitude, a humidity, or brightness) to generate an electrical signal or a data value corresponding to the information of the measured state or the detected state. The sensor module 1776 may include, for example, at least one of a gesture sensor, a gyro sensor, a barometric pressure sensor, a magnetic sensor, an acceleration sensor, a grip sensor, a proximity sensor, a color sensor (e.g., a red, green, blue (RGB) sensor), an infrared sensor, a biometric sensor (e.g., an iris sensor, a fingerprint senor, a heartbeat rate monitoring (HRM) sensor, an e-nose sensor, an electromyography (EMG) sensor, an electroencephalogram (EEG) sensor, an electrocardiogram (ECG) sensor), a temperature sensor, a humidity sensor, an illuminance sensor, or an UV sensor. The sensor module 1776 may further include a control circuit for controlling at least one or more sensors included therein. According to an embodiment, the electronic device 1701 may control the sensor module 1776 by using the processor 1720 or a processor (e.g., a sensor hub) separate from the processor 1720. When the separate processor (e.g., a sensor hub) is used, while the processor 1720 is in a sleep state, the separate processor may operate without awakening the processor 1720 to control at least a portion of the operation or the state of the sensor module 1776.

According to an embodiment, the interface 1777 may include a high definition multimedia interface (HDMI), a universal serial bus (USB), an optical interface, a recommended standard 232 (RS-232), a D-subminiature (D-sub), a mobile high-definition link (MHL) interface, a SD card/MMC(multi-media card) interface, or an audio interface. A connector 1778 may physically connect the electronic device 1701 and the electronic device 1706. According to an embodiment, the connector 1778 may include, for example, an USB connector, an SD card/MMC connector, or an audio connector (e.g., a headphone connector).

The haptic module 1779 may convert an electrical signal into mechanical stimulation (e.g., vibration or motion) or into electrical stimulation. For example, the haptic module 1779 may apply tactile or kinesthetic stimulation to a user. The haptic module 1779 may include, for example, a motor, a piezoelectric element, or an electric stimulator.

The camera module 1780 may capture, for example, a still image and a moving picture. According to an embodiment, the camera module 1780 may include at least one lens (e.g., a wide-angle lens and a telephoto lens, or a front lens and a rear lens), an image sensor, an image signal processor, or a flash (e.g., a light emitting diode or a xenon lamp).

The power management module 1788, which is to manage the power of the electronic device 1701, may constitute at least a portion of a power management integrated circuit (PMIC).

The battery 1789 may include a primary cell, a secondary cell, or a fuel cell and may be recharged by an external power source to supply power at least one component of the electronic device 1701.

The communication module 1790 may establish a communication channel between the electronic device 1701 and an external device (e.g., the first external electronic device 1702, the second external electronic device 1704, or the server 1708). The communication module 1790 may support wired communication or wireless communication through the established communication channel. According to an embodiment, the communication module 1790 may include a wireless communication module 1792 or a wired communication module 1794. The communication module 1790 may communicate with the external device through a first network 1798 (e.g. a wireless local area network such as Bluetooth or infrared data association (IrDA)) or a second network 1799 (e.g., a wireless wide area network such as a cellular network) through a relevant module among the wireless communication module 1792 or the wired communication module 1794.

The wireless communication module 1792 may support, for example, cellular communication, local wireless communication, global navigation satellite system (GNSS) communication. The cellular communication may include, for example, long-term evolution (LTE), LTE Advance (LTE-A), code division multiple access (CDMA), wideband CDMA (WCDMA), universal mobile telecommunications system (UMTS), Wireless Broadband (WiBro), or Global System for Mobile Communications (GSM). The local wireless communication may include wireless fidelity (Wi-Fi), Wi-Fi Direct, light fidelity (Li-Fi), Bluetooth, Bluetooth low energy (BLE), ZigBee, near field communication (NFC), magnetic secure transmission (MST), radio frequency (RF), or a body area network (BAN). The GNSS may include at least one of a Global Positioning System (GPS), a Global Navigation Satellite System (Glonass), Beidou Navigation Satellite System (Beidou), the European global satellite-based navigation system (Galileo), or the like. In the disclosure, "GPS" and "GNSS" may be interchangeably used.

According to an embodiment, when the wireless communication module 1792 supports cellar communication, the wireless communication module 1792 may, for example, identify or authenticate the electronic device 1701 within a communication network using the subscriber identification module (e.g., a SIM card) 1796. According to an embodiment, the wireless communication module 1792 may include a communication processor (CP) separate from the processor 1720 (e.g., an application processor (AP)). In this case, the communication processor may perform at least a portion of functions associated with at least one of components 1710 to 1796 of the electronic device 1701 in substitute for the processor 1720 when the processor 1720 is in an inactive (sleep) state, and together with the processor 1720 when the processor 1720 is in an active state. According to an embodiment, the wireless communication module 1792 may include a plurality of communication modules, each supporting only a relevant communication scheme among cellular communication, local wireless communication, or a GNSS communication.

The wired communication module 1794 may include, for example, a local area network (LAN) service, a power line communication, or a plain old telephone service (POTS).

For example, the first network 1798 may employ, for example, Wi-Fi direct or Bluetooth for transmitting or receiving commands or data through wireless direct connection between the electronic device 1701 and the first external electronic device 1702. The second network 1799 may include a telecommunication network (e.g., a computer network such as a LAN or a WAN, the Internet or a telephone network) for transmitting or receiving commands or data between the electronic device 1701 and the second electronic device 1704.

According to various embodiments, the commands or the data may be transmitted or received between the electronic device 1701 and the second external electronic device 1704 through the server 1708 connected with the second network 1799. Each of the first and second external electronic devices 1702 and 1704 may be a device of which the type is different from or the same as that of the electronic device 1701. According to various embodiments, all or a part of operations that the electronic device 1701 will perform may be executed by another or a plurality of electronic devices (e.g., the electronic devices 1702 and 1704 or the server 1708). According to an embodiment, when the electronic device 1701 executes any function or service automatically or in response to a request, the electronic device 1701 may not perform the function or the service internally, but may alternatively or additionally transmit requests for at least a part of a function associated with the electronic device 1701 to any other device (e.g., the electronic device 1702 or 1704 or the server 1708). The other electronic device (e.g., the electronic device 1702 or 1704 or the server 1708) may execute the requested function or additional function and may transmit the execution result to the electronic device 1701. The electronic device 1701 may provide the requested function or service using the received result or may additionally process the received result to provide the requested function or service. To this end, for example, cloud computing, distributed computing, or client-server computing may be used.

Various embodiments of the disclosure and terms used herein are not intended to limit the technologies described in the disclosure to specific embodiments. With regard to description of drawings, similar components may be marked by similar reference numerals. The terms of a singular form may include plural forms unless otherwise specified. In the disclosure disclosed herein, the expressions "A or B", "at least one of A and/or B", "A, B, or C", or "at least one of A, B, and/or C", and the like used herein may include any and all combinations of one or more of the associated listed items. Expressions such as "first," or "second," and the like, may express their components regardless of their priority or importance and may be used to distinguish one component from another component but is not limited to these components. When an (e.g., first) component is referred to as being "(operatively or communicatively) coupled with/to" or "connected to" another (e.g., second) component, it may be directly coupled with/to or connected to the other component or an intervening component (e.g., a third component) may be present.

According to the situation, the expression "adapted to or configured to" used herein may be interchangeably used as, for example, the expression "suitable for", "having the capacity to", "changed to", "made to", "capable of" or "designed to" in hardware or software. The expression "a device configured to" may mean that the device is "capable of" operating together with another device or other parts. For example, a "processor configured to (or set to) perform A, B, and C" may mean a dedicated processor (e.g., an embedded processor) for performing corresponding operations or a generic-purpose processor (e.g., a central processing unit (CPU) or an application processor (AP)) which performs corresponding operations by executing one or more software programs which are stored in a memory device (e.g., the memory 1730).

The term "module" used herein may include a unit, which is implemented with hardware, software, or firmware, and may be interchangeably used with the terms "logic", "logical block", "part", "circuit", or the like. The "module" may be a minimum unit of an integrated part or a part thereof or may be a minimum unit for performing one or more functions or a part thereof. The "module" may be implemented mechanically or electronically and may include, for example, an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media (e.g., the memory 1730) in the form of a program module. The instruction, when executed by a processor (e.g., the processor 1720), may cause the processor to perform a function corresponding to the instruction. The computer-readable recording medium may include a hard disk, a floppy disk, a magnetic media (e.g., a magnetic tape), an optical media (e.g., a compact disc read only memory (CD-ROM) and a digital versatile disc (DVD), a magnetooptical media (e.g., a floptical disk)), an embedded memory, and the like. The one or more instructions may contain a code made by a compiler or a code executable by an interpreter.

Each component (e.g., a module or a program module) according to various embodiments may be composed of single entity or a plurality of entities, a part of the above-described sub-components may be omitted, or other sub-components may be further included. Alternatively or additionally, after being integrated in one entity, some components (e.g., a module or a program module) may identically or similarly perform the function executed by each corresponding component before integration. According to various embodiments, operations executed by modules, program modules, or other components may be executed by a successive method, a parallel method, a repeated method, or a heuristic method, or at least one part of operations may be executed in different sequences or omitted. Alternatively, other operations may be added.

## Claims

1. An electronic device (100, 610, 1701) comprising:
a housing;
a speaker (130) positioned at a first portion of the housing;
a microphone positioned at a second portion of the housing;
a touch screen display (120, 1760) positioned at a third portion of the housing;
a communication circuit (1790) positioned inside the housing or attached to the housing;
a processor (150, 1720) positioned inside the housing and operatively connected to the speaker (130), the microphone, the display (120), and the communication circuit; and
a memory (140) positioned inside the housing and operatively connected to the processor,
wherein the memory (140) stores instructions that, when executed, cause the processor (150) to:
display a still image including a plurality of objects on the display (120);
receive a voice input of a user through the microphone, wherein the voice input includes a request for performing a task associated with at least one object included in the image, wherein the task further includes obtaining information associated with the at least one object included in the image;
transmit first data associated with the voice input to a first external server (200) via the communication circuit;
receive a first response from the first external server (200, 620) via the communication circuit, wherein the first response includes a path rule including information about an application to be executed, an action including a sequence of one or more states to be executed in the application, and a plurality of parameters necessary to execute the action, wherein the plurality of parameters include a first text associated with the at least one object and a third text associated with a category of the at least one object, wherein the first text includes information indicating the at least one object extracted from text data converted from the voice input; and
execute the sequence of one or more states to be executed in the application depending on the received path rule including the steps of:
extracting a region image of at least one object associated with the third text from the still image;
transmitting the region image associated with the voice input and the first text included in the path rule to a second external server (400, 630) via the communication circuit;
receiving a second response from the second external server (400, 630) via the communication circuit, wherein the second response includes a second text associated with performing at least part of the task; and
providing at least part of the second text via the display (120) or the speaker.

2. The electronic device (100, 610, 1701) of claim 1, wherein the second text further includes at least one of model information, function information, price information, manufacturer information, or seller information of a corresponding product when the at least one object is a product.

3. The electronic device (100, 610, 1701) of claim 1, further comprising:
a camera (1780),
wherein the image is a preview image using the camera.

4. The electronic device (100, 610, 1701) of claim 3, wherein the instructions cause the processor (150, 1720) to:
when receiving the first response, capture a preview image displayed on the display to store the captured image as a still image; and
transmit the second data associated with the stored still image and the first text to the second external server (400, 630).

## Patentansprüche

1. Elektronische Vorrichtung (100, 610, 1701), umfassend:
ein Gehäuse;
einen Lautsprecher (130), der an einem ersten Abschnitt des Gehäuses positioniert ist;
ein Mikrofon, das an einem zweiten Abschnitt des Gehäuses positioniert ist;
eine berührungsempfindliche Anzeige (120, 1760), die an einem dritten Abschnitt des Gehäuses positioniert ist;
eine Kommunikationsschaltung (1790), die innerhalb des Gehäuses positioniert oder an dem Gehäuse befestigt ist;
einen Prozessor (150, 1720), der innerhalb des Gehäuses positioniert und mit dem Lautsprecher (130), dem Mikrofon, der Anzeige (120) und der Kommunikationsschaltung wirkverbunden ist; und
einen Speicher (140), der innerhalb des Gehäuses positioniert und mit dem Prozessor wirkverbunden ist,
wobei der Speicher (140) Anweisungen speichert, die, wenn sie ausgeführt werden, den Prozessor (150) zu Folgendem veranlassen:
Anzeigen eines Standbilds, das eine Vielzahl von Objekten enthält, auf der Anzeige (120);
Empfangen einer Spracheingabe eines Benutzers über das Mikrofon, wobei die Spracheingabe eine Aufforderung zum Durchführen einer Aufgabe enthält, die mit mindestens einem in dem Bild enthaltenen Objekt verknüpft ist, wobei die Aufgabe ferner Erlangen von Informationen enthält, die mit dem mindestens einen in dem Bild enthaltenen Objekt verknüpft sind;
Übertragen erster mit der Spracheingabe verknüpfter Daten über die Kommunikationsschaltung an einen ersten externen Server (200);
Empfangen einer ersten Antwort von dem ersten externen Server (200, 620) über die Kommunikationsschaltung, wobei die erste Antwort eine Pfadregel, die Informationen über eine auszuführende Anwendung enthält, eine Aktion, die eine Abfolge von einem oder mehreren in der Anwendung auszuführenden Zuständen enthält, und eine Vielzahl von Parametern, die zum Ausführen der Aktion erforderlich sind, enthält, wobei die Vielzahl von Parametern einen ersten Text, der mit dem mindestens einen Objekt verknüpft ist, und einen dritten Text, der mit einer Kategorie des mindestens einen Objekts verknüpft ist, enthält, wobei der erste Text Informationen enthält, die das mindestens eine Objekt angeben, das aus Textdaten extrahiert wurde, die aus der Spracheingabe konvertiert wurden; und
Ausführen der Abfolge von einem oder mehreren Zuständen, die in der Anwendung auszuführen sind, abhängig von der empfangenen Pfadregel, was die folgenden Schritte enthält:
Extrahieren eines Bereichsbilds von mindestens einem mit dem dritten Text verknüpften Objekt aus dem Standbild;
Übertragen des mit der Spracheingabe verknüpften Bereichsbilds und des in der Pfadregel enthaltenen ersten Textes über die Kommunikationsschaltung an einen zweiten externen Server (400, 630);
Empfangen einer zweiten Antwort von dem zweiten externen Server (400, 630) über die Kommunikationsschaltung, wobei die zweite Antwort einen zweiten Text enthält, der mit dem Durchführen von mindestens einem Teil der Aufgabe verknüpft ist; und
Bereitstellen von mindestens einem Teil des zweiten Textes über die Anzeige (120) oder den Lautsprecher.

2. Elektronische Vorrichtung (100, 610, 1701) nach Anspruch 1, wobei der zweite Text ferner mindestens eines von Modellinformationen, Funktionsinformationen, Preisinformationen, Herstellerinformationen oder Verkäuferinformationen eines entsprechenden Produkts enthält, wenn das mindestens eine Objekt ein Produkt ist.

3. Elektronische Vorrichtung (100, 610, 1701) nach Anspruch 1, ferner umfassend:
eine Kamera (1780),
wobei das Bild ein Vorschaubild unter Verwendung der Kamera ist.

4. Elektronische Vorrichtung (100, 610, 1701) nach Anspruch 3, wobei die Anweisungen den Prozessor (150, 1720) zu Folgendem veranlassen:
beim Empfangen der ersten Antwort Erfassen eines auf der Anzeige angezeigten Vorschaubilds, um das erfasste Bild als ein Standbild zu speichern; und
Übertragen der mit dem gespeicherten Standbild verknüpften zweiten Daten und des ersten Texts an den zweiten externen Server (400, 630).

## Revendications

1. Dispositif électronique (100, 610, 1701) comprenant :
un boîtier ;
un haut-parleur (130) positionnée au niveau d'une première partie du boîtier ;
un microphone positionné au niveau d'une deuxième partie du boîtier ;
un dispositif d'affichage à écran tactile (120, 1760) positionné au niveau d'une troisième partie du boîtier ;
un circuit de communication (1790) positionné à l'intérieur du boîtier ou fixé au boîtier ;
un processeur (150, 1720) positionné à l'intérieur du boîtier et connecté fonctionnellement au haut-parleur (130), au microphone, au dispositif d'affichage (120) et au circuit de communication ; et
une mémoire (140) positionnée à l'intérieur du boîtier et connectée fonctionnellement au processeur,
ladite mémoire (140) stockant des instructions qui, lorsqu'elles sont exécutées, amènent le processeur (150) à :
afficher une image fixe comprenant une pluralité d'objets sur le dispositif d'affichage (120) ;
recevoir une entrée vocale d'un utilisateur par l'intermédiaire du microphone, ladite entrée vocale comprenant une demande de réalisation d'une tâche associée à au moins un objet compris dans l'image, ladite tâche comprenant en outre l'obtention d'informations associées à l'au moins un objet compris dans l'image ;
transmettre des premières données associées à l'entrée vocale à un premier serveur externe (200) par l'intermédiaire du circuit de communication ;
recevoir une première réponse en provenance du premier serveur externe (200, 620) par l'intermédiaire du circuit de communication, ladite première réponse comprenant une règle de chemin comprenant des informations concernant une application à exécuter, une action comprenant une séquence d'un ou plusieurs états à exécuter dans l'application, et une pluralité de paramètres nécessaires pour exécuter l'action, ladite pluralité de paramètres comprenant un premier texte associé à l'au moins un objet et un troisième texte associé à une catégorie dudit au moins un objet, ledit premier texte comprenant des informations indiquant le au moins un objet extraits de données textuelles converties à partir de l'entrée vocale ; et
exécuter la séquence d'un ou plusieurs états à exécuter dans l'application en fonction de la règle de chemin reçue comprenant les étapes de :
extraction d'une image de zone d'au moins un objet associé au troisième texte à partir de l'image fixe ;
transmission de l'image de zone associée à l'entrée vocale et au premier texte compris dans la règle de chemin à un second serveur externe (400, 630) par l'intermédiaire du circuit de communication ;
réception d'une seconde réponse en provenance du second serveur externe (400, 630) par l'intermédiaire du circuit de communication, la seconde réponse comprenant un deuxième texte associé à la réalisation d'au moins une partie de la tâche ; et
fourniture d'au moins une partie du deuxième texte par l'intermédiaire du dispositif d'affichage (120) ou du haut-parleur.

2. Dispositif électronique (100, 610, 1701) de la revendication 1, ledit deuxième texte comprenant en outre au moins l'une des information de modèle, des informations de fonction, des informations de prix, des informations de fabricant ou des informations de vendeur d'un produit correspondant lorsque le au moins un objet est un produit.

3. Dispositif électronique (100, 610, 1701) de la revendication 1, comprenant en outre : une caméra (1780), ladite image étant une image de prévisualisation utilisant la caméra.

4. Dispositif électronique (100, 610, 1701) de la revendication 3, lesdites instructions amenant le processeur (150, 1720) à :
lors de la réception de la première réponse, capturer une image d'aperçu affichée sur le dispositif d'affichage pour stocker l'image capturée sous la forme d'une image fixe ; et
transmettre les secondes données associées à l'image fixe stockée et au premier texte au second serveur externe (400, 630).
